# EUROPÄISCHE PATENTSCHRIFT

(11) **EP 1 247 373 B1**
(45) Veröffentlichungstag und Bekanntmachung des Hinweises auf die Patenterteilung: **16.07.2008**
(21) Anmeldenummer: 00900202.3
(22) Anmeldetag: 14.01.2000
(51) Int. Cl.: H04L 12/28, H04L 29/06, G06F 1/16

(54) **KOMMUNIKATIONSSYSTEM UND DAFÜR GEEIGNETE STEUEREINHEIT**
COMMUNICATIONS SYSTEM AND A CONTROL UNIT SUITABLE THEREFOR
SYSTEME DE COMMUNICATION ET UNITE DE COMMANDE ADAPTEE A CE SYSTEME

(43) Veröffentlichungstag der Anmeldung: 09.10.2002
(73) Patentinhaber: Swisscom AG, 3050 Bern (CH)
(72) Erfinder: RITTER, Rudolf, CH-3052 Zollikofen (CH); LAUPER, Eric, CH-3014 Bern (CH)
(74) Vertreter: Rentsch & Partner
(86) Internationale Anmeldenummer: PCT/CH2000/000023
(87) Internationale Veröffentlichungsnummer: WO 2001/052480

(56) Entgegenhaltungen:
- EP-A- 0 767 417
- EP-A- 0 809 172
- US-A- 5 864 481
- HAARTSEN J ET AL: "BLUETOOTH: VISION, GOALS, AND ARCHITECTURE" MOBILE COMPUTING AND COMMUNICATIONS REVIEW,US,ACM, NEW YORK, NY, Bd. 2, Nr. 4, 1. Oktober 1998 (1998-10-01), Seiten 38-45, XP000784002
- HAARTSEN J: "BLUETOOTH - THE UNIVERSAL RADIO INTERFACE FOR AD HOC, WIRELESS CONNECTIVITY" ERICSSON REVIEW,SE,ERICSSON. STOCKHOLM, Nr. 3, 1998, Seiten 110-117, XP000783249 ISSN: 0014-0171
- "Jini Technology and Emerging Network Technologies" SUN MICROSYSTEMS, [Online] 1999, Seiten 1-3, XP002141075 Gefunden im Internet: <URL:http://www.sun.com/jini/whitepapers/t echnologies.pdf> [gefunden am 2000-09-08]
- "WEARABLE COMPUTERS GET REAL" TEST AND MEASUREMENT WORLD. (INC. ELECTRONICS TEST ),US,CAHNERS PUBLISHING, DENVER, Bd. 18, Nr. 12, 15. Oktober 1998 (1998-10-15), Seiten 15-17, XP000788716 ISSN: 0744-1657

## Beschreibung

Die vorliegende Erfindung betrifft ein Kommunikationssystem und eine dafür geeignete Steuereinheit. Insbesondere betrifft die vorliegende Erfindung ein Kommunikationssystem und eine dafür geeignete Steuereinheit, die von einem Benutzer freihändig getragen werden können, wobei das Kommunikationssystem ein oder mehrere Signalaufnahmemodule umfasst, die jeweils Signale aus der Umgebung des Kommunikationssystems aufnehmen und in elektrische, respektive optische, Signale und/oder digitale Daten wandeln, und wobei das Kommunikationssystem ein oder mehrere Signalgebermodule umfasst, die jeweils elektrische, respektive optische, Signale und/oder digitale Daten in Signale wandeln, die vom Benutzer über seine Sinnesorgane wahrgenommen oder die an die Umgebung des Kommunikationssystems abgegeben werden können.

Kommunikationssysteme, die von einem Benutzer freihändig getragen werden können, sind bereits verfügbar. Es gibt beispielsweise freihändig tragbare Kommunikationssysteme, die ein Mobilfunktelefon umfassen, das entfernbar an einem Traggurt befestigt ist und über eine kontaktbehaftete Kabelschnittstelle mit einer kombinierten Kopfhörer/Mikrofon-Garnitur verbunden ist. In diesem Beispiel eines verfügbaren Kommunikationssystems repräsentieren das Mikrofon und der Funkempfänger des Mobilfunktelefons Signalaufnahmemodule, die akustische Signale, respektive Funksignale, aus der Umgebung des Kommunikationssystems aufnehmen, während der Kopfhörer und der Funksender des Mobilfunktelefons Signalgebermodule repräsentieren, die akustische Signale an die Sinnesorgane des Benutzers, respektive Funksignale an die Umgebung des Kommunikationssystems, abgeben.

In der Patentanmeldung DE 197 55 264 A1 wird ein tragbares Rechnersystem beschrieben, das vom Benutzer durch gesprochene Sprache und/oder Körperbewegungen gesteuert werden kann. Das Rechnersystem gemäss DE 197 55 264 A1 umfasst eine helmmontierte Anzeigeeinheit, die über ein Glasfaserkabel mit einem Verarbeitungsrechner und/oder mit anderen Aktivierungs- und Signalgeberkomponenten verbunden ist. Gemäss der in DE 197 55 264 A1 offenbarten Lehre kann ein entfernt stehender Rechner mit helmorientierten Komponenten über eine Funkverbindung verbunden sein. Die in DE 197 55 264 A1 beschriebene Verbindung von Komponenten des Rechnersystems mittels Glasfaserkabel(n) hat den Vorteil, dass sie insbesondere gegen magnetische und elektrostatische Störungen sicher ist. Andererseits werden Kabelverbindungen für die Verbindung von vom Benutzer getragenen Systemkomponenten von Benutzern oft als unbequem oder gar lästig empfunden, zum Beispiel weil sich Kabel in Kleidern oder an anderen Gegenständen verheddern können. Bei der Verbindung von mehreren Komponenten sind mehrere Kabel notwendig, was den angeführten Nachteil noch verstärkt.

In der Patentanmeldung EP 767 417 A1 wird freihändig trag- und bedienbares Rechnersystem beschrieben, das vom Benutzer durch gesprochene Sprache, Hirnströme, Augen- und/oder Körperbewegungen gesteuert werden kann. Das Rechnersystem gemäss EP 767 417 A1 besteht im wesentlichen aus einer Kopfgarnitur und einem an einem Traggurt befestigten lokalen Computer, der über eine drahtlose Schnittstelle, insbesondere eine Infrarotschnittstelle, kabellos mit der Kopfgarnitur verbunden ist. Für die Kommunikation mit einem weit entfernten Computer wird in der Patentanmeldung EP 767 417 A1 beschrieben, dass Verbindungen zwischen dem lokalen Computer und dem entfernten Computer mittels Radio-Transceivers oder zellulären Mobilfunktelefonen realisiert werden können. Die in EP 767 417 A1 beschriebene Verbindung zwischen der Kopfgarnitur und dem lokalen Computer unter Verwendung von gestreutem Infrarotlicht hat den Vorteil, dass sie nicht die Nachteile von kabelorientierten Verbindungen aufweist und dass sie vor unbefugten Abhörversuchen aus der Distanz ziemlich sicher ist. Andererseits weisen Infrarotschnittstellen den Nachteil auf, dass sie eine hindernisfreie Übertragungsstrecke zwischen Kommunikationspartnern erfordern, so dass der lokale Computer beispielsweise nicht unter lichtundurchlässiger Kleidung getragen werden kann, was wiederum von Benutzern als einschränkender Nachteil empfünden wird.

In den Dokumenten XP-000784002, Haartsen J. et. al.: "Bluetooth: Vision, Goals, and Architecture", Mobile Computing and Communications Review, US, ACM, New York, Band 2, Nummer 4, 1998, Seiten 38 bis 45, und XP-000783249, Haartsen J.: "Bluetooth - The universal radio interface for ad hoc, wireless connectivity", Ericsson Review, SE, Ericsson, Stockholm, Nummer 3, 1998, Seiten 110 bis 117, wird die so genannte Bluetooth Funkschnittstelle beschrieben. Die Bluetooth Funkschnittstelle ermöglicht tragbare elektronische Geräte wie Laptop-Computer, Mobilfunktelefone, Kopfhörer/Sprechgarnituren oder Computermäuse über kurze Distanzen für die drahtlose Datenkommunikation zusammenzuschalten. Mittels der Bluetooth Technologie werden die Geräte automatisch und dynamisch zusammengeschaltet, wenn sie sich innerhalb ihrer gegenseitigen Reichweite befinden. Mittels der Bluetooth Technologie können bis maximal acht Geräte, ein Master und sieben Slaves, in einem so genannten Piconet zusammengeschaltet werden. In Bluetooth kann ein Gerät in der Rolle eines Slaves zwar gleichzeitig mehreren Piconets angehören, aber zu einem bestimmten Zeitpunkt nur in einem Piconet aktiv sein.

Im Dokument XP-002141075, "Jini Technology and Emerging Network Technologies", Sun Microsystems, Online (http://www.sun.com/jini/whitepapers/technologies.pdf) 1999, Seiten 1 bis 3, wird die auf Java basierte Jini Technologie beschrieben, die die Abwicklung von Dienstanwendungen zwischen zwei elektronischen Geräten wie Personal Data Assistants (PDA), Fernsehgeräte, Digitalkameras, Faxgeräte oder Mobilfunktelefone über Netzwerkprotokolle wie Bluetooth ermöglicht (Java und Jini sind eingetragene Warenzeichen der Firma Sun Microsystems).

Es ist eine Aufgabe dieser Erfindung, ein neues und besseres freihändig tragbares Kommunikationssystem und eine dafür geeignete freihändig tragbare Steuereinheit vorzuschlagen, welche insbesondere eine flexible Konfiguration von Signalaufnahmemodulen und Signalgebermodulen als Komponenten des Kommunikationssystem sowie eine kabellose Verbindung dieser Komponenten, ermöglichen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Diese Ziele werden durch die vorliegende Erfindung insbesondere dadurch erreicht, dass Signalaufnahmemodule des freihändig tragbaren Kommunikationssystems, die jeweils Signale aus der Umgebung des Kommunikationssystems aufnehmen und in digitale Daten wandeln, und Signalgebermodule des Kommunikationssystems, die jeweils digitale Daten in Signale wandeln, die an die Umgebung des Kommunikationssystems abgegeben werden können und von denen insbesondere mindestens gewisse vom Benutzer über seine Sinnesorgane wahrgenommen werden können, jeweils über eine Gerätefunkschnittstelle verfügen, und dass das Kommunikationssystem mindestens eine Steuereinheit mit mindestens einer Gerätefunkschnittstelle umfasst, welche Steuereinheit so eingerichtet ist, dass Daten von den genannten Modulen, das heisst von den Signalaufnahmemodulen und den Signalgebermodulen, über die Gerätefunkschnittstelle in der Steuereinheit entgegengenommen werden können, dass Daten von der Steuereinheit über die Gerätefunkschnittstelle selektiv an die genannten Module übertragen werden können, und dass genannte Module dynamisch zum Kommunikationssystem hinzufügbar und vom Kommunikationssystem entfernbar sind. Zur Realisierung des letztgenannten Merkmals umfasst die Steuereinheit Registriermittel, um genannte Module, die vom Benutzer dynamisch zum Kommunikationssystem hinzugefügt, respektive vom Kommunikationssystem entfernt werden, automatisch zu registrieren, respektive zu deregistrieren. Der Vorteil der Verbindung von Signalaufnahmemodulen und Signalgebermodulen über eine Gerätefunkschnittstelle mit einer Steuereinheit, die automatisierte Registriermittel für die dynamische Registrierung von genannten Modulen umfasst, besteht darin, dass diese Komponenten (Module und Steuereinheit) kontaktlos, ohne die Verwendung von Kabeln und ohne notwendigen hindemisfreien optischen Kontakt, zu einem flexibel konfigurierbaren Kommunikationssystem zusammengefasst werden können, wobei dieses Kommunikationssystem insbesondere auch mobil ist und mobil eingesetzt werden kann. Dabei besteht die Flexibilität darin, dass Module, insbesondere mobile und tragbare Module, die jeweils über die Gerätefunkschnittstelle verfügen, ohne weiteren Aufwand durch den Benutzer zum Kommunikationssystem dynamisch hinzugefügt oder vom Kommunikationssystem dynamisch entfernt werden können, je nachdem, welche Funktionalität des Kommunikationssystems der Benutzer zum betreffenden Zeitpunkt wünscht, respektive über welche Module der Benutzer verfügt. Komponenten (Module und Steuereinheit), die nicht in einer Kopfgarnitur integriert sind, können vom Benutzer beispielsweise an dafür geeigneten Traggurten, über oder unter der Kleidung, oder in einer oder mehreren vorhandenen Taschen der Kleidung getragen werden und insbesondere mobil eingesetzt werden, spezielle Ausgestaltungen, beispielsweise eine Steuereinheit in Form einer Armbanduhr, oder an vordefinierten Körperpartien zu tragende Signalaufnahmemodule, die beispielsweise Körperbewegungen/positionen aufnehmen, sind aber auch möglich. Die selektive Übertragung von Daten von der Steuereinheit über die Gerätefunkschnittstelle an die genannten Module ermöglicht, dass Daten gezielt an ein spezifisches Modul, an eine Gruppe von spezifischen Modulen oder an alle Module des Kommunikationssystems übertragen werden können.

Als Beispiele für mögliche Signalaufnahmemodule sollen hier, nicht abschliessend, Videosensoren zur Aufnahme von Lichtsignalen, Funkempfänger zur Aufname von Radiosignalen, zum Beispiel Radiosignale von Mobilfunknetzen, insbesondere GSM- und/oder UMTS-Netze, und/oder von Broadcastsystemen, insbesondere DAB und/oder DVB-Systeme, Infrarotempfänger zur Aufnahme von Infrarotsignalen, Mikrofone für die Aufnahme von akustischen Signalen, Drucksensoren zur Aufnahme von mechanischem Druck, Augenpositionsbestimmungseinheiten zur Bestimmung der aktuellen Blickrichtung von mindestens einem Auge des Benutzers und Körperteilpositionsbestimmungseinheiten, zur Bestimmung der aktuellen Position von Körperteilen des Benutzers, angeführt werden.

Als Beispiele für mögliche Signalgebermodule sollen hier, nicht abschliessend, Anzeigeeinheiten zur sichtbaren Wiedergabe von Informationen für den Benutzer, elektro-akustische Wandler zur Wiedergabe von Informationen in hörbarer Form für den Benutzer, Vibrationseinheiten zum Anzeigen von vordefinierten Ereignissen für den Benutzer mittels mechanischen Vibrationen, Funksender, zum Beispiel Funksender für die Kommunikation über Mobilfunknetze, insbesondere GSM- und/oder UMTS-Netze, und Infrarotsender angeführt werden.

An dieser Stelle soll auch festgehalten werden, dass gewisse Signalaufnahmemodule und Signalgebermodule, beispielsweise ein Mikrofon, ein Kopfhörer und eine Anzeigeeinheit, oder eine Anzeigeeinheit und eine Augenpositionsbestimmungseinheit, oder ein Funksender und ein Funkempfänger, oder ein Videosensor und eine Anzeigeeinheit, auch in einer gemeinsamen Vorrichtungsanordnung, beispielsweise in einer Kopfgarnitur, kombiniert werden können, wobei für die Module beispielsweise eine gemeinsame Gerätefunkschnittstelle und/oder eine gemeinsame Energiespeiseeinheit in der Vorrichtungsanordnung vorgesehen werden kann.

Erfindungsgemäss umfasst die Steuereinheit Mittel, beispielsweise einen Prozessor und einen Speicher für Programme und Daten mit darin gespeicherter, auf dem Prozessor ausführbarer Programmeinheit, um Daten, die durch die Steuereinheit von einem bestimmten Signalaufnahmemodul entgegengenommen werden, an ein dem bestimmten Signalaufnahmemodul zugeordnetes Signalgebermodul weiterzuleiten, wobei die Steuereinheit so eingerichtet ist, dass die Bestimmung von mindestens gewissen Signalaufnahmemodulen und die Zuordnung von mindestens gewissen Signalgebermodulen zu bestimmten Signalaufnahmemodulen durch den Benutzer konfiguriert werden können. Der Vorteil der benutzerbestimmbaren Zuordnung von Signalaufnahmemodulen zu Signalgebermodulen und die Weiterleitung von Daten, die beispielsweise vom Signalaufnahmemodul aufgenommen wurden, entsprechend dieser Zuordnung über die Gerätefunkschnittstelle, besteht darin, dass separate Module vom Benutzer (oder gemäss abgespeicherten Vorzugswerten) flexibel zur Kooperation zusammengeschaltet werden können. So können Daten, die von einem Signalaufnahmemodul aufgenommen werden, beispielsweise ein Funkempfänger eines Mobilfunktelefons, über die Gerätefunkschnittstelle und die Steuereinheit kontaktlos an ein Signalgebermodul weitergeleitet werden, beispielsweise in Abhängigkeit des Datentyps Audiodaten an einen Kopfhörer und/oder textuelle Daten an eine Anzeigeeinheit.

In einer bevorzugten Ausführungsvariante umfasst die Steuereinheit Funktionseinheiten, um Daten vor deren Übertragung an ein Signalgebermodul zu verarbeiten, wobei die Aktivierung, die Deaktivierung und/oder die Funktionsweise von mindestens gewissen Funktionseinheiten durch den Benutzer konfiguriert werden können. Die Verarbeitung von Daten durch Funktionseinheiten vor deren Weiterleitung an Signalgebermodule ermöglicht nahezu unbegrenzte Anwendungen, wobei insbesondere auch Module zur Kooperation zusammengeschaltet werden können, die unterschiedliche Daten- respektive Signaltypen betreffen.

Als Beispiele für mögliche Funktionseinheiten sollen hier, nicht abschliessend. Sprachsyntheseeinheiten zur Generierung von synthetischer Sprache aus Textdaten, Spracherkennungseinheiten zur Erkennung von gesprochenem Text, Bildverarbeitungseinheiten zur Erkennung von Bildobjekten, benutzerspezifische Datenfilter, Signalfrequenzfilter und/oder Signalfrequenztransformationseinheiten, die das Frequenzspektrum von Signalen, respektive diesen Signalen entsprechenden Daten, verschieben, angeführt werden.

In einer bevorzugten Ausführungsvariante umfasst die Steuereinheit eine Befehlseinheit, um Daten, die durch die Steuereinheit von einem Signalaufnahmemodul entgegengenommen werden, als Befehle zu erkennen und entsprechend einem erkannten Befehl die Ausführung von vordefinierten Funktionsblöcken einzuleiten, wobei die Steuereinheit so eingerichtet ist, dass Signalaufnahmemodule, deren Daten durch die Befehlseinheit auf darin enthaltene Befehle untersucht werden sollen, durch den Benutzer festlegbar sind. Der Vorteil der Befehlseinheit, die Daten von Signalaufnahmemodulen analysieren und darin enthaltene Befehle, insbesondere Benutzerbefehle, erkennen kann, besteht insbesondere darin, dass je nach den vorhandenen Signalaufnahmemodulen mehrere verschiedene (Benutzer-)Schnittstellen zur Eingabe von Befehlen verfügbar gemacht werden können, wobei geeignete Signalaufnahmemodule, die der Benutzer für die Eingabe von Befehlen verwenden will, durch den Benutzer bestimmt werden können. Beispielsweise kann die Befehlseinheit mittels eines Spracherkennungsmoduls Befehle erkennen, die in ein Mikrofon gesprochen werden, oder die Befehlseinheit kann Befehle auf Grund von aktuellen Blickrichtungen erkennen, die in der Steuereinheit von einer Augenpositionsbestimmungseinheit entgegengenommen werden, oder die Befehlseinheit kann Befehle erkennen, die von einem Signalaufnahmemodul manuell mittels Bedienungselementen eingegeben werden, oder die Befehlseinheit kann Befehle auf Grund von aktuellen Positionen von bestimmten Körperteilen des Benutzers erkennen, die in der Steuereinheit von einer Körperteilpositionsbestimmungseinheit entgegengenommen werden.

In einer Ausführungsvariante ist einer der Funktionsblöcke so ausgestaltet, dass ein erkannter Befehl über die Gerätefunkschnittstelle und/oder über eine Infrarotschnittstelle an externe Einheiten ausserhalb des Kommunikationssystem weitergeleitet wird, wodurch das Kommunikationssystem beispielsweise auch zur Steuerung von entsprechend ausgerüsteten externen Einheiten ausserhalb des Kommunikationssystems eingesetzt werden kann.

In einer Ausführungsvariante umfasst das Kommunikationssystem eine entfernbare Speichereinheit, beispielsweise eine Chipkarte, in welcher Modulparameter, die die Operation von individuellen genannten Modulen beeinflussen, und/oder Konfigurationsparameter, die die Interaktion zwischen genannten Modulen bestimmen und/oder Signalaufnahmemodule identifizieren, deren Daten durch die Befehlseinheit auf darin enthaltene Befehle untersucht werden sollen, gespeichert sind. Diese Modulparameter und Konfigurationsparameter können als Alternative oder zusätzlich auch in einem festen Datenspeicher des Kommunikationssystems, insbesondere in der Steuereinheit, gespeichert werden. Die entfernbare Speichereinheit kann zudem mit Mitteln zur eindeutigen Benutzeridentifizierung versehen sein, beispielsweise kann die entfernbare Speichereinheit als Identifizierungseinheit mit einer eindeutigen Benutzeridentifizierung ausgeführt sein, insbesondere als SIM-Karte (Subscriber Identification Module). Die Identifizierungseinheit kann beispielsweise Bestandteil eines Mobilfunktelefons sein, das als kombiniertes Signalaufnahme-und Signalgebermodul über die Gerätefunkschnittstelle mit der Steuereinheit verbunden ist, oder die Identifizierungseinheit kann Bestandteil der Steuereinheit sein. Der Vorteil der Identifizierungseinheit besteht darin, dass sie ermöglicht, das freihändig tragbare Kommunikationssystem als persönliches Kommunikationssystem zu konfigurieren und zu benützen, wobei benutzerspezifische Parameter, insbesondere Modulparameter, die die Operation von individuellen genannten Modulen beeinflussen, und/oder Konfigurationsparameter, die die Interaktion zwischen zwei oder mehreren genannten Modulen bestimmen, in der Identifizierungseinheit gespeichert werden.

In einer Ausführungsvariante umfassen mindestens gewisse der genannten Module Datenspeicher zur Speicherung der oben erwähnten Modulparameter, die die Operation des betreffenden Moduls beeinflussen, wobei diese Datenspeicher für die Steuereinheit über die Gerätefunkschnittstelle gesichert zugänglich sind, so dass Modulparameter nicht irrtümlicherweise oder unberechtigterweise von anderen externen Funkeinheiten ausserhalb des Kommunikationssystems gesetzt werden können. Die Modulparameter können beispielsweise durch den Benutzer über eine der verfügbaren Benutzerschnittstellen eingegeben oder mittels einem Funkempfänger, beispielsweise über ein Mobilfunknetz, von einer geeigneten externen Diensteinheit ausserhalb des Kommunikationssystem entgegengenommen werden und von der Steuereinheit auf das betreffende Modul übertragen werden.

In einer Ausführungsvariante umfasst der oben erwähnte Videosensor mindestens einen mikroelektromechanischen (MEM) Scanner zur Erfassung der Lichtsignale. Der Vorteil von mikroelektromechanischen Scannern besteht unter anderem darin, dass sie auch für die direkte Projizierung von Lichtsignalen auf die Retina eingesetzt werden können. So umfasst die oben erwähnte Anzeigeeinheit in einer Ausführungsvariante eine virtuelle retinale Anzeigeeinheit, basierend auf mindestens einem mikroelektromechanischen Scanner, welche Lichtsignale direkt auf die Retina des Benutzers projiziert.

In einer Ausführungsvariante umfasst das Kommunikationssystem mindestens ein Signaltransformationsmodul, in welchem Signaltransformationsmodul ein Signalaufnahmemodul und ein Signalgebermodul über eine Signalverarbeitungseinheit miteinander verbunden sind, wobei die Signalverarbeitungseinheit elektrische und/oder optische Signale vom letztgenannten Signalaufnahmemodul basierend auf Modulparametern des Signaltransformationsmoduls verarbeitet und an das letztgenannte Signalgebermodul weiterleitet. Als Beispiele für Signaltransformationsmodule und deren Modulparameter sollen hier, nicht abschliessend, Hörgeräte und deren benutzerspezifische Hörparameter sowie spezielle Sehgeräte, insbesondere sehkorrigierende und sehunterstützende Sehgeräte, beispielsweise Nachtsichtgeräte, welche Lichtsignale aus dem Infrarotbereich in sichtbare Lichtsignale transformieren, und deren benutzerspezifische Sehparameter angeführt werden.

An dieser Stelle soll festgehalten werden, dass sich die vorliegende Erfindung neben dem erfindungsgemässen Kommunikationssystem auch auf eine Steuereinheit zur Realisierung dieses Kommunikationssystems bezieht.

Nachfolgend wird eine Ausführung der vorliegenden Erfindung anhand von Beispielen beschrieben. Die Beispiele der Ausführung werden durch folgende einzige beigelegte Figur illustriert:

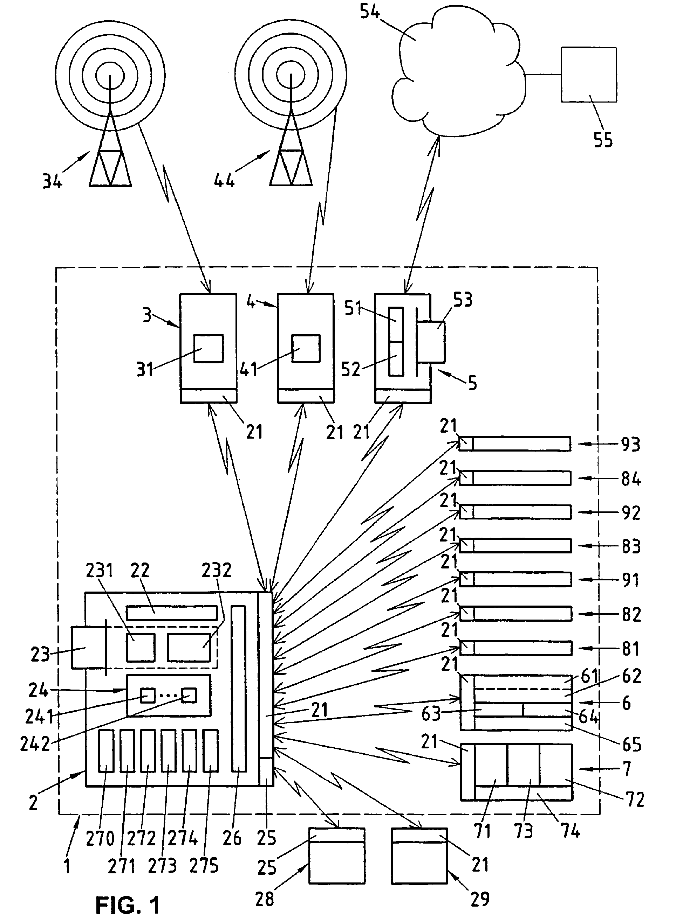

Figur 1 zeigt ein Blockdiagramm, in welchem schematisch ein Kommunikationssystem mit einer Steuereinheit, mit Signalaufname- und Signalgebermodulen, sowie externe Einheiten ausserhalb des Kommunikationssystems dargestellt sind.

In der Figur 1 bezieht sich die Bezugsziffer 1 auf ein mobiles und durch einen Benutzer freihändig tragbares Kommunikationssystem, welches eine Steuereinheit 2 sowie mehrere Signalaufnahmemodule 3, 4, 51, 61, 65, 71, 81, 82, 83, 84 und mehrere Signalgebermodule 52, 62, 72, 91, 92, 93 umfasst. Als Signalaufnahmemodule 3, 4, 51, 61, 65, 71, 81, 82, 83, 84 werden Module bezeichnet, die jeweils Signale aus der Umgebung des Kommunikationssystems 1 aufnehmen und in elektrische und/oder optische Signale und/oder in digitale Daten wandeln. Als Signalgebermodule 52, 62, 72, 91, 92, 93 werden Module bezeichnet, die jeweils elektrische und/oder optische Signale und/oder digitale Daten in Signale wandeln, die vom Benutzer über seine Sinnesorgane wahrgenommen oder die an die Umgebung des Kommunikationssystems 1 abgegeben werden können. Als zusammenfassender Überbegriff für Signalaufnahmemodule und Signalgebermodule wird im folgenden Text der Begriff Module verwendet.

Wie in der Figur 1 illustriert wird, können zwischen den Modulen 3, 4, 51, 61, 65, 71, 81, 82, 83, 84, 52, 62, 72, 91, 92, 93 und der Steuereinheit 2 Daten über eine kontaktlose Gerätefunkschnittstelle 21 ausgetauscht werden. Obwohl der Datenaustausch prinzipiell bidirektional erfolgen kann, ist es durchaus möglich, gewisse der Module nur für eine unidirektionale Datenübertragung auszulegen, beispielsweise können einfach ausgestaltete Signalgebermodule bloss mit einem Funkempfänger für den Empfang von Daten von der Steuereinheit 2 über die Gerätefunkschnittstelle 21 ausgeführt werden, oder einfach ausgestattete Signalaufnahmemodule können bloss mit einem Funksender für die Übertragung von Daten an die Steuereinheit 2 über die Gerätefunkschnittstelle 21 ausgeführt werden. Signalaufnahmemodule und Signalgebermodule können auch in einer gemeinsamen Vorrichtung kombiniert werden, beispielsweise können Funkempfänger 51 und Funksender 52 für Mobilfunknetze 54, beispielsweise ein GSM- oder UMTS-Netz oder ein anderes, beispielsweise ein satellitenbasiertes Mobilfunknetz, in einem Mobilfunkgerät 5, insbesondere ein Mobilfunktelefon, integriert sein. Signalaufnahmemodule und Signalgebermodule, die in einer gemeinsamen Vorrichtung kombiniert sind können beispielsweise über eine gemeinsame Gerätefunkschnittstelle 21 und über eine gemeinsame Speiseeinheit verfügen. Speiseeinheiten für die Signalaufnahme- und Signalgebermodule umfassen zum Beispiel herkömmliche Batterien und/oder Solarzellen und können beispielsweise durch die Steuereinheit 2 mit vordefinierten Befehlen über die Gerätefunkschnittstelle 21 selektiv von einem energiesparsamen Bereitschaftszustand eingeschaltet, respektive vom eingeschalteten Zustand in den Bereitschaftszustand gesetzt werden. Obwohl dies in der Figur 1 nicht dargestellt ist kann die Steuereinheit 2 auch so ausgeführt sein, dass gewisse der Signalaufnahme- und/oder Signalgebermodule in der Steuereinheit 2 integriert sind, so dass für diese direkt integrierten Module die Gerätefunkschnittstelle 21 entfällt.

Die Gerätefunkschnittstelle 21 ist vorzugsweise eine standardisierte Gerätefunkschnittstelle, zum Beispiel eine hochfrequente Funkschnittstelle, insbesondere eine sogenannte Bluetooth-Schnittstelle, die z.B. bei 2.4GHz arbeitet und zum Anmeldezeitpunkt der vorliegenden Erfindung beispielsweise im Internet auf der Seite "www.bluetooth.com" beschrieben wurde. Die in der Figur 1 symbolisch dargestellten Gerätefunkschnittstellen 21 (sowie auch die Infrarotschnittstelle 25) umfassen jeweils die notwendigen Hardware- und Softwarekomponenten für die Realisierung der verschiedenen Schichten der betreffenden Gerätefunkschnittstelle (respektive Infrarotschnittstelle) gemäss dem von der ISO (International Standards Organisation) spezifizierten OSI-Referenzmodell (Open Systems Interconnection). Je nach Art und/oder Übertragungskapazität der betreffenden Gerätefunkschnittstelle kann es auch vorteilhaft sein, die Steuereinheit mit mehreren Gerätefunkschnittstellen auszuführen, beispielsweise separate Gerätefunkschnittstellen für getrennte Links- und Rechtskanäle von bestimmten Signalgebermodulen, zum Beispiel Anzeigeeinheiten für das linke und rechte Auge des Benutzers oder elektro-akustische Wandler für das linke und rechte Ohr des Benutzers.

Ein Benutzer, der mit einer Steuereinheit 2 ausgestattet ist, kann sein persönliches Kommunikationssystem 1 flexibel konfigurieren, indem er Vorrichtungen, die jeweils ein oder mehrere Signalaufnahme- und/oder Signalgebermodule umfassen, dynamisch zum Kommunikationssystem 1 hinzufügt, respektive vom Kommunikationssystem 1 entfernt. Die freihändig tragbare Steuereinheit 2 wird vom Benutzer am Körper getragen, beispielsweise an einem Traggurt, in einer Tasche seiner Kleidung oder mit geeigneten Befestigungsmitteln an einem Körperteil, beispielsweise in der Form einer Armbanduhr am Handgelenk. Ein zusätzliches Modul wird zum Kommunikationssystem 1 hinzugefügt, indem es, wie für die Steuereinheit 2 beschrieben, vom Benutzer getragen wird und indem durch Registriermittel der Steuereinheit 2, die Registriereinheit 22, registriert wird. Die Steuereinheit 2 umfasst je nach Ausführung mindestens einen Prozessor und einen für diesen Prozessor zugänglichen Speicher zur Speicherung von Daten und Programmeinheiten, die zur Ausführung der unterschiedlichen Funktionen der Steuereinheit 2 benötigt werden. Funktionale Einheiten und Blöcke, die als Programmeinheiten realisiert werden, können in der Regel aber auch hardwaremässig realisiert werden. Als Alternative zur Ausführung der Steuereinheit 2 als eigenständige Vorrichtung mit Gehäuse, Speisung und gegebenenfalls mit eigenen Bedienungselementen und Anzeigeeinheit kann die Steuereinheit 2 auch in andere Vorrichtungen, insbesondere in andere mobile Vorrichtungen, beispielsweise in ein Mobilfunktelefon, eingebaut werden.

Die Registriereinheit 22 ist beispielsweise eine Programmeinheit, die in einem Speicher der Steuereinheit 2 gespeichert ist und auf einem Prozessor der Steuereinheit 2 ausgeführt wird. Insbesondere Module, die über eine bidirektionale Gerätefunkschnittstelle 21 verfügen, können durch die Steuereinheit 2 automatisch registriert werden. Der Registrierprozess der Registriereinheit 22 kann beispielsweise durch einen Befehl des Benutzers, automatisch beim Einschalten der Steuereinheit 2 und/oder periodisch durch die Registriereinheit 22 initiiert werden. Gegebenenfalls kann die Registriereinheit 22 auch Dienste und/oder Informationen der Gerätefunkschnittstelle 21 verwenden, um die Präsenz von Signalaufnahme- und/oder Signalgebermodulen zu verifizieren und/oder zu registrieren. Mit geeigneten Meldungen, die von der Steuereinheit 2 über die Gerätefunkschnittstelle 21 ausgestrahlt werden, können Module aufgefordert werden, sich über die Gerätefunkschnittstelle 21 zu identifizieren. Bereits registrierte Module können von der Steuereinheit 2 über die Gerätefunkschnittstelle 21 aufgefordert werden, ihre Präsenz zu bestätigen; dies kann beispielsweise beim Einschalten der Steuereinheit 2 und/oder periodisch und/oder modulspezifisch durchgeführt werden. Der Registrierprozess kann in einer anderen Ausführungsvariante auch durch die Module eingeleitet werden, indem diese unaufgefordert, beispielsweise beim Einschalten des betreffenden Moduls und/oder periodisch, der Steuereinheit 2 ihre Präsenz über die Gerätefunkschnittstelle melden. Um eine irrtümliche Registrierung von Modulen, die nicht vom Benutzer getragen werden, zu verhindern, kann vorgesehen werden, dass die Registrierung vom Benutzer bestätigt werden muss. Der Dialog zwischen dem Benutzer und der Steuereinheit 2, insbesondere für Grundoperationen, wie die Registrierung von zusätzlichen Modulen, kann beispielsweise mittels einfachen nicht dargestellten Bedienungselementen, zum Beispiel Druckknöpfe, und einer einfachen nicht dargestellten Anzeige, beispielsweise eine LCD-Anzeige, der Steuereinheit 2 durchgeführt werden. In der Regel kann der Dialog zwischen dem Benutzer und der Steuereinheit 2 aber über geeignete Signalaufnahme- und Signalgebermodule abgewickelt werden, wie später im Zusammenhang mit der Befehlseinheit 24 der Steuereinheit 2 erläutert wird.

Die Module des Kommunikationssystems 1 werden von der Registriereinheit 22 in eine Modultabelle 231 eingetragen. In Abhängigkeit der verwendeten Gerätefunkschnittstelle 21 wird jeweils für ein Modul eine temporäre, innerhalb des Kommunikationssystems 1 eindeutige, und/oder eine permanente eindeutige Modulidentifizierung, beispielsweise eine eindeutige Gerätenummer, eingetragen. Vom betreffenden Modul können bei der Registrierung auch weitere modulspezifischen Angaben an die Registriereinheit 22 übermittelt und in der Modultabelle 231 eingetragen werden. In der Steuereinheit können modulspezifische Angaben für gängige Modultypen auch bereits gespeichert sein, und von der Registriereinheit 22 auf Grund einer von einem Modul entgegengenommen Modultypidentifizierung bestimmt und für das betreffende Modul in der Modultabelle 231 eingetragen werden. Modulspezifische Angaben können aber auch durch den Benutzer eingegeben werden und von der Registriereinheit 22 in die Modultabelle 231 eingetragen werden. Als Beispiele für modulspezifische Angaben sollen hier, nicht abschliessend, der (oder die) Funktionstyp(en) des Moduls, unterstützte Datentypen, Fileformate und Kompressionsverfahren des Moduls sowie konfigurierbare Parameter des Moduls angeführt werden, wobei durch die konfigurierbaren Modulparameter die Operation des betreffenden Moduls benutzerspezifisch beeinflusst werden kann. In der Modultabelle 231 können durch die Steuereinheit 2 auch Statusinformationen für die Module des Kommunikationssystems 1 verwaltet werden.

Daten, die in der Steuereinheit 2 über die Gerätefunkschnittstelle 21, über die Infrarotschnittstelle 25 oder von in der Steuereinheit 2 integrierten Signalaufnahmemodulen, beispielsweise die oben erwähnten nicht dargestellten Bedienungselemente oder der Infrarotsender/-empfänger 25, entgegengenommen werden, werden an eine Routingeinheit 26 geleitet. Die Routingeinheit 26 leitet unaufgeforderte und/oder durch die Steuereinheit 2 angeforderte Registriermeldungen, die beispielsweise auf Grund eines speziellen Datenvorsatzes erkennbar sind, zur weiteren Behandlung direkt an die Registriereinheit 22 weiter. Daten, die von Signalaufnahmemodulen erhalten werden, werden von der Routingeinheit 26 gemäss Angaben in der Konfigurationstabelle 232 der Steuereinheit 2 behandelt.

Die Konfigurationstabelle 232 enthält Konfigurationsparameter, die insbesondere die Interaktion zwischen den registrierten Modulen des Kommunikationssystems 1 bestimmen und die durch den Benutzer gesetzt werden können. Mittels der Konfigurationsparameter in der Konfigurationstabelle 232 kann der Fluss der Signale, respektive der Fluss der diesen Signalen entsprechenden Daten, die von den Signalaufnahmemodulen aufgenommen und an die Steuereinheit 2 übermittelt werden, insbesondere an geeignete Signalgebermodule vom Benutzer flexibel konfiguriert werden. Zudem können vom Benutzer Funktionseinheiten 270-275 spezifiziert werden, in welchen die den Signalen entsprechenden Daten verarbeitet werden, bevor sie von der Steuereinheit 2 an das/die spezifizierten Signalgebermodul(e) geleitet werden. Der Benutzer kann zudem auch Funktionsparameter spezifizieren, die die Funktionsweise des/der Funktionseinheit(en) bestimmen. Die Funktionsparameter können entweder direkt in der Konfigurationstabelle 232 gespeichert werden oder die Konfigurationstabelle 232 kann auch bloss einen Zeiger auf die in einer separaten Tabelle gespeicherten Funktionsparameter enthalten. Im wesentlichen enthält die Konfigurationstabelle 232 eine Identifizierung der Daten/Signalquelle (Signalaufnahmemodul), eine oder mehrere Identifizierungen von Daten/Signalsenken (insbesondere Signalgebermodule), eine oder mehrere Identifizierungen von Funktionseinheiten 270-275 sowie diesbezügliche Funktionsparameter.

Als spezielle Daten/Signalsenke kann der Benutzer in der Konfigurationstabelle 232 auch die oben erwähnte Befehlseinheit 24 spezifizieren, wobei auch in diesem Fall Funktionseinheiten 270-275 sowie diesbezügliche Funktionsparameter spezifiziert werden können, so dass Daten vor deren Weiterleitung an die Befehlseinheit 24 in den spezifizierten Funktionseinheiten 270-275 basierend auf den spezifizierten Funktionsparametern verarbeitet werden.

Die Befehlseinheit 24, untersucht Daten, die durch die Steuereinheit 2 von Signalaufnahmemodulen entgegengenommen und von der Routingeinheit 26 gemäss der Konfigurationstabelle 232 an die Befehlseinheit 24 geleitet wurden, daraufhin, ob diese Daten Befehle, insbesondere Benutzerbefehle, enthalten. Wenn die Befehlseinheit 24 einen solchen Befehl erkennt, leitet sie die Ausführung eines diesem Befehl zugeordneten vordefinierten Funktionsblocks 241-242 ein. Die Funktionsblöcke 241-242 sowie deren Zuordnung zu Befehlen kann auch konfigurierbar ausgeführt werden, beispielsweise können Speichereinheiten mit vordefinierten Funktionsblöcken 241-242 und Zuordnungen zu Befehlen vom Benutzer erworben und in die Steuereinheit eingeführt oder geladen werden oder es können dem Benutzer dafür geeignete Macro-Programmierwerkzeuge zur Verfügung gestellt werden.

Als weitere spezielle Daten/Signalsenke kann der Benutzer in der Konfigurationstabelle 232 auch Datenspeicher spezifizieren, wenn die von einem Signalaufnahmemodul entgegengenommenen Daten abgespeichert werden sollen.

Als Beispiele von Funktionseinheiten 270-275 sollen hier, nicht abschliessend, eine Sprachsyntheseeinheit 270 zur Generierung von synthetischer Sprache aus Textdaten, eine Spracherkennungseinheit 271 zur Erkennung von gesprochenem Text, in digitaler Form, eine Bildverarbeitungseinheit 272 zur Erkennung von Bildobjekten aus digitalen Bilddaten, Datenfilter 273 zur Filterung von digitalen Datenwerten, beispielsweise gemäss vordefinierten Benutzerprofilen, Signalfrequenzfilter 274, insbesondere digitale Filter, und/oder Signalfrequenztransformationseinheiten 275 angeführt werden. Die Funktionseinheiten 270-275 sind beispielsweise als Programmeinheiten ausgeführt, die in der Steuereinheit gespeichert werden und auf einem Prozessor der Steuereinheit 2, insbesondere ein Signalverarbeitungsprozessor, ausgeführt werden.

Wie in der Figur 1 angedeutet wird, können die Konfigurationstabelle 232 und die Modultabelle 231 auf einer entfernbaren Speichereinheit 23, beispielsweise eine Chipkarte, gespeichert werden. Die entfernbare Speichereinheit kann auch mit Mitteln zur eindeutigen Benutzeridentifizierung versehen sein, beispielsweise kann die entfernbare Speichereinheit als Identifizierungseinheit mit einer eindeutigen Benutzeridentifizierung ausgeführt sein, beispielsweise als SIM-Karte (Subscriber Identification Module), die auch zur Identifizierung des Benutzers in Mobilfunknetzen eingesetzt werden kann. Die Konfigurationstabelle 232 und die Modultabelle 231 können aber auch in einem festinstallierten Speicher in der Steuereinheit 2 gespeichert werden und beispielsweise ab einer SIM-Karte 53 eines Mobilfunkgeräts 5, beispielsweise ein Mobilfunktelefon, über die Gerätefunkschnittstelle 21 in die Steuereinheit 2 geladen werden. Verschiedene Sätze von vordefinierten Konfigurationstabellen 232 und Modultabellen 231 können aber auch ab einer Diensteinheit 55, über ein Mobilfunknetz 54, ein Mobilfunkgerät 5 und die Gerätefunkschnittstelle 21 in die Steuereinheit 2 geladen werden. Der Benutzer kann auch verschiedene Speichereinheiten 23 mit verschiedenen Konfigurationstabellen 232 und Modultabellen 231 direkt in die Steuereinheit 2 einfügen.

Als Beispiele für mögliche Signalaufnahmemodule sollen hier, nicht abschliessend, Videosensoren 61, 84 zur Aufnahme von Lichtsignalen, Funkempfänger 3, 4, 51 zur Aufname von Radiosignalen, zum Beispiel ein Funkempfänger 51 zur Aufname von Radiosignalen von Mobilfunknetzen 54, insbesondere GSM- und/oder UMTS-Netze, und/oder Radiosignale, insbesondere Radiosignale mit digitalen programmbegleitenden Daten, von Broadcastsystemen, zum Beispiel ein DAB-Funkempfänger 3 (Digital Audio Broadcasting) zur Aufname von Radiosignalen von einem DAB-Funksender 34 und/oder ein DVB-Funkempfänger 4 (Digital Video Broadcasting) zur Aufname von Radiosignalen von einem DVB-Funksender 44, Infrarotempfänger 25 zur Aufnahme von Infrarotsignalen, Mikrofone 71, 83 für die Aufnahme von akustischen Signalen, Drucksensoren 82 zur Aufnahme von mechanischem Druck, Augenpositionsbestimmungseinheiten 65 zur Bestimmung der aktuellen Blickrichtung von mindestens einem Auge des Benutzers und Körperteilpositionsbestimmungseinheiten 81, zur Bestimmung der aktuellen Position von Körperteilen des Benutzers, angeführt werden. Als weitere Beispiele für Signalaufnahmemodule sollen hier auch Positionsbestimmungsmodule angegeben werden, beispielsweise Positionsbestimmungsmodule, die auf dem Global Positioning System (GPS) oder die auf einem Terrestrischen Positionierungssystem (TPS) basieren, welche Positionsbestimmungsmodule Signale aus der Umgebung des Kommunikationssystems 1 aufnehmen und daraus Positionsangaben ermitteln, die beispielsweise an die Steuereinheit 2 übermittelt werden. Falls das Kommunikationssystem 1 nicht nur mobil eingesetzt werden soll, können auch Signalaufnahmemodule eingesetzt werden, die über kontaktbehaftete und/oder kontaktlose Schnittstellen an Festnetze, beispielsweise das öffentliche, geschaltete Telefonnetz oder ein ISDN-Netz, oder an festinstallierte Vorrichtungen angeschlossen werden.

Als Beispiele für mögliche Signalgebermodule sollen hier, nicht abschliessend, Anzeigeeinheiten 62, 93 zur sichtbaren Wiedergabe von Informationen für den Benutzer, elektro-akustische Wandler 72, 92 zur Wiedergabe von Informationen in hörbarer Form für den Benutzer, Vibrationseinheiten 91 zum Anzeigen von vordefinierten Ereignissen für den Benutzer mittels mechanischen Vibrationen, Funksender 52, zum Beispiel Funksender für die Kommunikation über Mobilfunknetze 54, insbesondere GSM- und/oder UMTS-Netze, Funkgeräteschnittstellen, beispielsweise Bluetooth-Schnittstellen, und Infrarotsender 25 angeführt werden.

Zur Illustration von Anwendungsmöglichkeiten der Konfigurationstabelle 232 werden in der Tabelle 1 basierend auf den oben angeführten Beispielen von Signalaufnahmemodulen, Signalgebermodulen und Funktionseinheiten mögliche Beispiele wiedergegeben.

Der mit a) bezeichnete Eintrag in der Tabelle 1 illustriert die Konfiguration des Kommunikationssystems 1 für die Eingabe von sprachgesteuerten Befehlen über ein Mikrofon 83.

Der mit b) bezeichnete Eintrag in der Tabelle 1 illustriert die Konfiguration des Kommunikationssystems 1 für die Eingabe von Befehlen mittels Augenpositionen, die durch die Augenpositionsbestimmungseinheit 65 erfasst werden, wobei aktuelle Augenpositionen in der Befehlseinheit 24 mit vordefinierten Positionen verglichen werden.

Der mit c) bezeichnete Eintrag in der Tabelle 1 illustriert die Konfiguration des Kommunikationssystems 1 für die Eingabe von Befehlen mittels Körperbewegungen, die durch die Körperteilpositionsbestimmungseinheit 81 erfasst werden. Als Beispiele für Körperteilpositionsbestimmungseinheiten 81 sollen hier insbesondere Körperteilpositionsbestimmungseinheiten für Finger, Hände, Beine, Arme und Kopf angegeben werden, die beispielsweise aus den verschiedenen Anwendungsgebieten der virtuellen Realität bekannt sind.

**Tabelle 1**

| | Signal/Datenquelle | Funktionseinheit | Funktionsparameter | Signal/Datensenke | ... |
|---|---|---|---|---|---|
| a) | Mikrofon 83 | Spracherkennungseinheit 271 | benutzerspezifische Sprachparameter | Befehlseinheit 24 | ... |
| b) | Augenpositionsbestimmungseinheit 65 | | | Befehlseinheit 24 | ... |
| c) | Körperteilpositionsbestimmungseinheit 81 | | | Befehlseinheit 24 | ... |
| d) | DAB-Funkempfänger 3 | Datenfilter 273 | Benutzerprofil | elektro-akustischer Wandler 92 | ... |
| e) | DVB-Funkempfänger 4 | Datenfilter 273 | Benutzerprofil | Anzeigeeinheit 93 | ... |
| f) | Videosensor 84 | Bildverarbeitungseinheit 272 Sprachsyntheseeinheit 270 | Bildobjektliste | elektro-akustischer Wandler 92 | ... |
| g) | Videosensor 84 | Signalfrequenztransformationseinheit 275 | Transformationsparameter | Anzeigeeinheit 93 | ... |

Der mit d) bezeichnete Eintrag in der Tabelle 1 illustriert die Weiterleitung von Radioprogrammen, die vom DAB-Funkempfänger 3 empfangen werden, an den elektro-akustischen Wandler 92, beispielsweise ein Kopfhörer, wobei programmbegleitende Daten durch das Datenfilter 273, beispielsweise gemäss benutzerspezifischen Interessensgebieten, die in einem Benutzerprofil spezifiziert sind, gefiltert werden.

Der mit e) bezeichnete Eintrag in der Tabelle 1 illustriert die Weiterleitung von Videoprogrammen, die vom DVB-Funkempfänger 4 empfangen werden, an die Anzeigeeinheit 93, beispielsweise ein LCD-Display oder eine virtuelle retinale Anzeigeeinheit, wobei programmbegleitende Daten durch das Datenfilter 273, beispielsweise gemäss benutzerspezifischen Interessensgebieten, die in einem Benutzerprofil spezifiziert sind, gefiltert werden.

Der mit f) bezeichnete Eintrag in der Tabelle 1 illustriert die Konfiguration des Kommunikationssystems 1 als Sehhilfe durch die Verarbeitung von Bilddaten, die vom Videosensor 84 empfangen werden, in der Bildverarbeitungseinheit 272, welche beispielsweise für erkannte Bildobjekte Bezeichnungen in Textform generiert, sowie die weitere Verarbeitung der generierten Textdaten in der Sprachsyntheseeinheit 270, welche aus den Textdaten synthetische Sprachsignale generiert, die an den elektro-akustischen Wandler 92 weitergeleitet werden.

Der mit g) bezeichnete Eintrag in der Tabelle 1 illustriert die Konfiguration des Kommunikationssystems 1 als Sehhilfe durch die Verarbeitung von Bilddaten, die vom Videosensor 84 empfangen werden, in der Signalfrequenztransformationseinheit 275, gemäss Transformationsparametern, welche beispielsweise der Transformation von Infrarotlicht in für den Benutzer sichtbare Lichtsignale entsprechen, und die Wiedergabe der transformierten Bilddaten an die Anzeigeeinheit 93.

Die Tabelle 1 illustriert nur eine kleine Anzahl von möglichen Konfigurationen, die im erfindungsgemässen Kommunikationssystem 1 möglich sind. Spezifische Konfigurationen, die in der Konfigurationstabelle 232 definiert sind, können beispielsweise auch über die Befehlseinheit 24 aktiviert werden, indem beispielsweise einer der Funktionsblöcke 241-242 so ausgelegt ist, dass er einen im Befehl angegebenen Eintrag aktiviert (z.B. Befehl-Aktivieren-d), was insbesondere dann nützlich ist, wenn die Konfigurationstabelle 232 eine Vielzahl von Einträgen umfasst, die sich zum Teil widersprechen (ansonsten wird bei widersprüchlichen Einträgen beispielsweise per Default der erste der sich widersprechenden Einträge aktiviert).

Durch entsprechende Einträge in der Konfigurationstabelle 232 und/oder durch entsprechende Funktionsblöcke 241-242 können Daten, insbesondere Befehle, von der Steuereinheit 2 auch an externe (nicht registrierte) Einheiten 28, 29 ausserhalb des Kommunikationssystem 1 übermittelt werden, respektive Daten von diesen externen Einheiten 28, 29 entgegengenommen und beispielsweise dem Benutzer angezeigt werden. Es kann auch vorgesehen werden, dass externe Einheiten 28, 29 zumindest temporär in der Steuereinheit 2 registriert werden. Die Steuereinheit 2 des Kommunikationssystems 1 ermöglicht folglich die Interaktion mit externen Einheiten 28, 29, beispielsweise Haushaltgeräte, Unterhaltungsgeräte, Bankautomaten, Zutrittskontrollvorrichtungen, und/oder Verkaufsautomaten, sowie andere benutzersteurbare Vorrichtungen, beispielsweise Transportvorrichtungen wie Rollstühle oder Automobile, die so vom Benutzer, beispielsweise sprachgesteuert, über die Gerätefunkschnittstelle 21 oder die Infrarotschnittstelle 25 bedient werden können.

Im Kommunikationssystem 1 können Signalaufnahmemodule und Signalgebermodule, die Datenspeicher 31, 41, 64, 74 (sowie Datenspeicher auf der Identifizierungseinheit 53) mit modulspezifischen Modulparametern umfassen, welche Modulparameter die Operation des betreffenden Moduls bestimmen, durch die Steuereinheit 2 konfiguriert werden, indem solche Modulparameter von der Steuereinheit 2 über die Gerätefunkschnittstelle 21 an betreffende Module übertragen werden (die Modulparameter können durch die Steuereinheit 2 auch in diesen Datenspeichern gelesen werden). Vorzugsweise erfolgt diese Übertragung gesichert, so dass die Modulparameter nicht unberechtigterweise oder zufälligerweise durch andere externe Funksender geändert werden. Als Beispiele für solche Modulparameter sollen hier, nicht abschliessend, benutzerspezifische Hörparameter für Hörgeräte 7, benutzerspezifische Sehparameter für Sehgeräte 6, benutzerspezifische Daten auf der Identifizierungseinheit 53, oder Benutzerprofile für die Filterung von programmbegleitenden Daten in den Broadcastempfängern 3, 4 angeführt werden.

Eines oder mehrere Signalaufnahmemodule und ein oder mehrere Signalgebermodule können in einem sogenannten Signaltransformationsmodul über eine Signalverarbeitungseinheit miteinander verbunden sein, wobei die Signalverarbeitungseinheit elektrische und/oder optische Signale vom letztgenannten Signalaufnahmemodul, beispielsweise basierend auf Modulparametern, die im Signaltransformationsmodul gespeichert sind, verarbeitet und an das letztgenannte Signalgebermodul weiterleitet. Als Beispiele für Signaltransformationsmodule sollen hier, nicht abschliessend, das oben erwähnte Hörgerät 7 sowie das oben erwähnte Sehgerät 6 angeführt werden.

Das Sehgerät 6 umfasst eine virtuelle retinale Anzeigeeinheit 62, die Bilder für den Benutzer des Sehgeräts 6 sichtbar macht, indem sie entsprechende Bildsignale auf die Retina des Auges des Benutzers projiziert. Die Bilddaten für die Bilder werden durch geeignete Videosensoren 61, beispielsweise durch eine Videokamera oder durch geeignete Optikelemente 61 unter Verwendung der virtuellen retinalen Anzeigeeinheit 62 als aufnehmender Bildscanner, aufgenommen und den Bilddaten entsprechende Bildsignale durch die virtuelle retinale Anzeigeeinheit 62 auf die Retina projiziert. Die Verwendung von mikroelektromechanischen (MEM) Elementen, insbesondere mikroelektromechanische Scanner mit einem zweiachsigen Spiegel, für die Projizierung von Bildsignalen in einer direkten retinalen Anzeigeeinheit und/oder für die Aufnahme von von Objekten reflektiertem oder abgestrahltem Licht wird beispielsweise in der Patentanmeldung WO 98/13720 beschrieben. An dieser Stelle sollte erwähnt werden, dass es durchaus möglich ist, die aufgenommenen Bilddaten in einer Signalverarbeitungseinheit 63 mit geeigneten Bildverarbeitungsmitteln, beispielsweise basierend auf benutzerspezifischen Sehparametern im Datenspeicher 64, zu verändern, bevor sie für den Benutzer sichtbar gemacht werden, beispielsweise können Konturen hervorgehoben, Kontraste erhöht oder andere Bildverarbeitungen vorgenommen werden, beispielsweise eine Signalfrequenztransformation, die der Transformation von infrarotem Licht auf für den Benutzer sichtbares Licht entspricht. Die Komponenten des Sehgeräts 6 sind vorzugsweise in einem gemeinsamen Gehäuse integriert oder auf einem gemeinsamen Träger installiert, wobei dieses Gehäuse oder dieser Träger vorzugsweise so ausgestaltet ist, dass es/er von einem Benutzer wie eine herkömmliche Brille aufgesetzt werden kann. Weitere Komponenten, wie ein Mikrofon und/oder ein Kopfhörer, respektive Hörgeräte, und insbesondere auch die Gerätefunkschnittstelle 21 können ebenfalls an diesem gemeinsamen Träger angebracht werden.

Eine virtuelle retinale Anzeigeeinheit (Virtual Retinal Display, VRD), welche Bildsignale direkt auf die Retina eines Betrachters projizieren kann, wurde beispielsweise in den Patentanmeldungen WO 94/09472, WO 97/37339 und in der oben erwähnten Patentanmeldung WO 98/13720 beschrieben. Diese virtuellen retinalen Anzeigeeinheiten können über eine Videoschnittstelle mit Bilddaten versorgt werden, beispielsweise in Form eines RGB-Signals, eines NTSC-Signals, eines VGA-Signals oder eines anderen formatierten farbigen oder monochromen Video- oder Grafiksignals. Der Fachmann wird verstehen, dass es vorteilhaft sein kann, die in den erwähnten Patentschriften WO 94/09472 und WO 97/37339 beschriebene virtuelle retinale Anzeigeeinheit, respektive die dort beschriebene Videoschnittstelle, so anzupassen, dass es je nach den verwendeten Videosensoren auch andere Formate von Bilddaten effizient entgegennehmen kann. Mittels eines nicht dargestellten Schnittstellenmoduls können aufgenommene Bilddaten aber auch geeignet an die Videoschnittstelle angepasst werden, respektive erhaltene Bilddaten so umgewandelt werden, dass sie an die Videoschnittstelle angelegt und mittels der virtuellen retinalen Anzeigeeinheit 62 für den Benutzer sichtbar gemacht werden können.

Wie in der Figur 1 schematisch dargestellt ist, umfasst das Sehgerät 6 eine Augenpositionsbestimmungseinheit 65, welche aktuelle Augenpositionen des Benutzers beim Betrachten von Bildern bestimmen und über die Gerätefunkschnittstelle 21 an die Steuereinheit 2 leiten kann. Eine Augenpositionsbestimmungseinheit (Eye Tracker), welche aktuelle Augenpositionen basierend auf der Position der Pupille eines Benutzers bestimmt, wurde ebenfalls in der oben erwähnten Patentanmeldung WO 94/09472 beschrieben und kann vom Fachmann so erweitert werden, dass die bestimmte Augenposition über die Gerätefunkschnittstelle 21 an die Steuereinheit 2 übermittelt werden kann; je nach Ausführung können Werte für beide Augen verfügbar gemacht werden. An dieser Stelle soll zudem angeführt werden, dass ermittelte Augenpositionen, beispielsweise in der Steuereinheit 2, zusätzlich mit erfasster Kopfposition, respektive Kopfbewegung, die beispielsweise durch die Körperteilpositionsbestimmungseinheit 81 bezüglich der horizontalen und vertikalen Ebene als horizontale und vertikale Kopfdrehwinkel, erfasst werden, kombiniert werden können, um die eigentliche Blickrichtung des Benutzers zu bestimmen.

Zusammen mit der Augenpositionsbestimmungseinheit 65 kann das Sehgerät 6 als grafische Benutzerschnittstelle eingesetzt werden, die vom Benutzer durch Positionierung seiner Augen gesteuert werden kann, indem die Steuereinheit 2 über die virtuelle retinale Anzeigeeinheit 62 GUI-Objekte (Graphical User Interface) in Bildbereiche auf die Retina des Benutzers projiziert, beispielsweise sogenannte Steuer-Icons, die vordefinierten Augenpositionswerten entsprechen, und durch Vergleichen der aktuellen Augenpositionen mit den vordefinierten Augenpositionswerten (in der Befehlseinheit 24) vom Benutzer mittels Augenpositionierung eingegebene Befehle entgegennehmen kann.

Das oben erwähnte Hörgerät 7 umfasst ein Mikrofon 71, das über eine Signalverarbeitungseinheit 73 mit einem elektro-akustischen Wandler 72, beispielsweise ein Kopfhörer, verbunden ist. Die Signalverarbeitungseinheit 73 verarbeitet vom Mikrofon 71 entgegengenommene elektrische Signale, respektive diesen Signalen entsprechende Daten, basierend auf benutzerspezifischen Hörparameter, die im Datenspeicher 74 gespeichert sind.

Obwohl dies in der Figur 1 nicht dargestellt wurde, soll hier erwähnt werden, dass der Benutzer über die Steuereinheit 2 auch mit weiteren Vorrichtungen kommunizieren, respektive diese Vorrichtungen steuern kann, die jeweils mit einer Gerätefunkschnittstelle versehen sind, beispielsweise festinstallierte Kommunikationsendgeräte und/oder Personal Computer, die beispielsweise an ein Kommunikationsnetz, insbesondere an das Internet angeschlossen sind. Es ist für den Benutzer auch möglich, über die Steuereinheit 2, insbesondere mobil, auf das Internet zuzugreifen, beispielsweise über WAP (Wireless Application Protocol), das in der Steuereinheit 2 oder in einem der Module, beispielsweise im Mobilfunkgerät 5, ausgeführt ist.

An dieser Stelle soll auch explizit erwähnt werden, dass die Steuereinheit 2 über verschiedene Programmeinheiten verfügt, um verschiedene Fileformate, Datenübertragungsprotokolle und Kompressions-/Dekompressionsverfahren, insbesondere aus dem Multimediabereich, beispielsweise MPEG-Standards (Moving Picture Expert Group), zu unterstützen und insbesondere auch gegenseitig zu konvertieren, so dass Signalgeber- und Signalaufnahmemodule mit verschiedenen Fileformaten, Datenübertragungsprotokollen und Kompressions-/Dekompressionsverfahren über die Routingeinheit 26 miteinander verbunden werden können. Um Überlastungen durch gleichzeitigen Dateneingang von verschiedenen Signalgebermodulen vorzubeugen, kann die Steuereinheit auch mit zusätzlichen Datenpufferspeichern versehen werden.

Das erfindungsgemässe Kommunikationssystem 1 basierend auf der erfindungsgemässen Steuereinheit 2 macht es für Benutzer möglich, verschiedene Komponenten, insbesondere verschiedene Signalaufnahme- und Signalgebermodule, zum Kommunikationssystem 1 hinzuzufügen, respektive vom Kommunikationssystem 1 zu entfernen, und konfigurierbar über die Steuereinheit 2 untereinander zu verbinden. Der Benutzer kann auch verschiedene Signalaufnahmemodule, respektive Signalgebermodule, als Ein-, respektive Ausgabemodule, für Benutzerschnittstellen konfigurieren und über diese Benutzerschnittstelle verschiedenste externe Vorrichtungen steuern. Die Konfigurierung kann durch Befehlseingabe über diese Benutzerschnittstellen erfolgen. Vordefinierte Konfigurationen können, beispielsweise über ein Kommunikationsnetz oder gespeichert auf Datenträgern, auch in die Steuereinheit geladen werden. Es können gleichzeitig auch verschiedene Konfigurationen in der Steuereinheit 2 gespeichert sein, die vom Benutzer über die Benutzerschnittstellen aktiviert werden können. Die Steuereinheit 2 kann auch durch den Benutzer konfiguriert werden, beispielsweise indem, über ein Kommunikationsnetz oder mittels Datenträger, verschiedene Verarbeitungseinheiten 270-275, verschiedene Funktionseinheiten 241-242, verschiedene Konfigurationstabellen 232, verschiedene Modultabellen 231 und/oder verschiedene Befehlseinheiten 24 in die Steuereinheit 2 geladen werden.

Konfigurationen die vom Benutzer über die Steuereinheit 2 vorgenommen werden können, können natürlich auch durch entsprechend ausgebildetes und berechtigtes Fachpersonal durchgeführt werden, beispielsweise vor Ort in einer Dienststelle oder entfernt über eine Telekommunikationsverbindung.

Abschliessend soll hier angeführt werden, dass das Kommunikationssystem 1 auch mehrere Steuereinheiten 2 umfassen kann, wobei beispielsweise eine dieser Steuereinheiten 2 als koordinierende Master-Einheit konfiguriert werden kann und Modulparameter und/oder Konfigurationsparameter verteilt gespeichert und/oder auf sämtliche beteiligten Steuereinheiten 2 repliziert werden können.

### Liste der Bezugszeichen

- 1: Kommunikationssystem
- 2: Steuereinheit
- 3: DAB-Funkempfänger
- 4: DVB-Funkempfänger
- 5: Mobilfunkgerät
- 6: Sehgerät
- 7: Hörgerät
- 21: Gerätefunkschnittstelle
- 22: Registriereinheit
- 23: entfernbare Speichereinheit
- 24: Befehlseinheit
- 25: Infrarotsender/-empfänger
- 26: Routingeinheit
- 28, 29: externe Einheit
- 31: Datenspeicher
- 34: DAB-Funksender
- 41: Datenspeicher
- 44: DVB-Funksender
- 51: Funkempfänger für Mobilfunknetze
- 52: Funksender für Mobilfunknetze
- 53: Identifizierungseinheit
- 54: Mobilfunknetz
- 55: Diensteinheit
- 61: Videosensor
- 62: Anzeigeeinheit
- 63: Signalverarbeitungseinheit
- 64: Datenspeicher
- 65: Augenpositionsbestimmungseinheit
- 71: Mikrofon
- 72: elektro-akustischer Wandler
- 73: Signalverarbeitungseinheit
- 74: Datenspeicher
- 81: Körperteilpositionsbestimmungseinheit
- 82: Drucksensor
- 83: Mikrofon
- 84: Videosensor
- 91: Vibrationseinheit
- 92: elektro-akustischer Wandler
- 93: Anzeigeeinheit
- 231: Modultabelle
- 232: Konfigurationstabelle
- 241, 242: Funktionsblock
- 270: Sprachsyntheseeinheit
- 271: Spracherkennungseinheit
- 272: Bildverarbeitungseinheit
- 273: Datenfilter
- 274: Signalfrequenzfilter
- 275: Signalfrequenztransformationseinheit

## Patentansprüche

1. Kommunikationssystem (1), das durch einen Benutzer freihändig tragbar ist, umfassend ein oder mehrere Signalaufnahmemodule (3, 4, 51, 61, 65, 71, 81, 82, 83, 84), die jeweils Signale aus der Umgebung des Kommunikationssystems (1) aufnehmen und in digitale Daten wandeln, und ein oder mehrere Signalgebermodule (52, 62, 72, 91, 92, 93), die jeweils digitale Daten in Signale wandeln, die an die Umgebung des Kommunikationssystems (1) abgebbar sind und von denen insbesondere mindestens gewisse vom Benutzer über seine Sinnesorgane wahrnehmbar sind, wobei die genannten Module jeweils über eine Gerätefunkschnittstelle (21) verfügen, wobei das Kommunikationssystem (1) eine Steuereinheit (2) mit einer Gerätefunkschnittstelle (21) umfasst, über welche Gerätefunkschnittstelle (21) Daten von den genannten Modulen in der Steuereinheit (2) entgegennehmbar sind und über welche Gerätefünkschnittstelle (21) Daten von der Steuereinheit (2) selektiv an die genannten Module übertragbar sind, wobei die Steuereinheit (2) Registriermittel (22) umfasst, um genannte Module, die vom Benutzer dynamisch zum Kommunikationssystem (1) hinzugefügt, respektive vom Kommunikationssystem (1) entfernt werden, automatisch zu registrieren, respektive zu deregistrieren, **dadurch gekennzeichnet,**
**dass** die Steuereinheit (2) einen Speicher (23) umfasst, in welchem eine Konfigurationstabelle gespeichert ist, in der die Bestimmung von mindestens gewissen Signalaufnahmemodulen als Datenquellen und die Zuordnung von mindestens gewissen Signalgebermodulen als Datensenken zu bestimmten Signalaufnahmemodulen, insbesondere durch den Benutzer, konfigurierbar sind, und
**dass** die Steuereinheit (2) Mittel umfasst, um Daten, die durch die Steuereinheit (2) von einem bestimmten Signalaufnahmemodul entgegengenommen werden, gemäss Angaben in der Konfigurationstabelle an ein dem bestimmten Signalaufnahmemodul zugeordnetes Signalgebermodul weiterzuleiten.

2. Kommunikationssystem (1) gemäss Anspruch 1, **dadurch gekennzeichnet, dass** die Steuereinheit (2) Funktionseinheiten (270-275) umfasst, um Daten vor deren Übertragung an ein Signalgebermodul zu verarbeiten, wobei die Aktivierung, die Deaktivierung und/oder die Funktionsweise von mindestens gewissen Funktionseinheiten (270-275), insbesondere durch den Benutzer, konfigurierbar sind.

3. Kommunikationssystem (1) gemäss einem der Ansprüche 1 oder 2, **dadurch gekennzeichnet, dass** die Steuereinheit (2) eine Befehlseinheit (24) umfasst, um Daten, die durch die Steuereinheit (2) von einem Signalaufnahmemodul entgegengenommen werden, als Befehle zu erkennen und entsprechend einem erkannten Befehl die Ausführung von vordefinierten Funktionsblöcken (241-242) einzuteilen, wobei die Steuereinheit (2) so eingerichtet ist, dass Signalaufnahmemodule, deren Daten durch die Befehlseinheit (24) auf darin enthaltene Befehle untersucht werden sollen, insbesondere durch den Benutzer, festlegbar sind.

4. Kommunikationssystem (1) gemäss einem der Ansprüche 1 bis 3, **dadurch gekennzeichnet, dass** es eine entfernbare Speichereinheit (23) umfasst, und dass Modulparameter, die die Operation von individuellen genannten Modulen beeinflussen, und/oder Konfigurationsparameter, die die Interaktion zwischen genannten Modulen bestimmen und/oder Signalaufnahmemodule identifizieren, deren Daten durch eine Befehlseinheit (24) auf darin enthaltene Befehle untersucht werden sollen, in der entfernbaren Speichereinheit (23) gespeichert sind.

5. Kommunikationssystem (1) gemäss einem der Ansprüche 1 bis 4, **dadurch gekennzeichnet, dass** mindestens gewisse der genannten Module Datenspeicher (31, 41, 53, 64, 74) zur Speicherung von Modulparametern umfassen, welche Modulparameter die Operation des betreffenden Moduls beeinflussen, wobei diese Datenspeicher (31, 41, 53, 64, 74) für die Steuereinheit (2) über die Gerätefunkschnittstelle (21) zugänglich sind.

6. Kommunikationssystem (1) gemäss Anspruch 2, **dadurch gekennzeichnet, dass** die Funktionseinheiten (270-275) eine Sprachsyntheseeinheit (270) zur Generierung von synthetischer Sprache aus Textdaten, eine Spracherkennungseinheit (271) zur Erkennung von gesprochenem Text, eine Bildverarbeitungseinheit (272) zur Erkennung von Bildobjekten, benutzerspezifische Datenfilter (273), Signalfrequenzfilter (274) und/oder Signalfrequenztransformationseinheiten (275) umfassen.

7. Kommunikationssystem (1) gemäss Anspruch 3, **dadurch gekennzeichnet, dass** mindestens einer der Funktionsblöcke (241-242) so ausgestaltet ist, dass ein erkannter Befehl über die Gerätefunkschnittstelle (21) und/oder über eine Infrarotschnittstelle (25) an externe Einheiten (28, 29) ausserhalb des Kommunikationssystems (1) weiterleitbar ist.

8. Komrriunikationssystem (1) gemäss einem der Ansprüche 1 bis 7, **dadurch gekennzeichnet, dass** die Signalaufnahmemodule einen Videosensor (61, 84) zur Aufnahme von Lichtsignalen, einen Funkempfänger (3, 4, 5) zur Aufnahme von Radiosignalen, einen Infrarotempfänger (25) zur Aufnahme von Infrarotsignalen, ein Mikrofon (71, 83) für die Aufnahme von akustischen Signalen, einen Drucksensor (82) zur Aufnahme von mechanischem Druck, eine Augenpositionsbestimmungseinheit (65) zur Bestimmung der aktuellen Blickrichtung von mindestens einem Auge des Benutzers und/oder eine oder mehrere Körperteilpositionsbestimmungseinheiten (81), zur Bestimmung der aktuellen Position von Körperteilen des Benutzers, umfassen.

9. Kommunikationssystem (1) gemäss Anspruch 8, **dadurch gekennzeichnet, dass** der Funkempfänger (51) zur Aufnahme von Radiosignalen von Mobilfunknetzen (54), insbesondere GSM- und/oder UMTS-Netze, und/oder von Broadcastsystemen (34, 44), insbesondere DAB (34) und/oder DVB-Systeme (44), ausgelegt ist.

10. Kommunikationssystem (1) gemäss einem der Ansprüche 8 oder 9, **dadurch gekennzeichnet, dass** der Videosensor (61) mindestens einen mikroelektromechanischen Scanner zur Erfassung der Lichtsignale umfasst.

11. Kommunikationssystem (1) gemäss einem der Ansprüche 1 bis 10, **dadurch gekennzeichnet, dass** die Signalgebermodule eine Anzeigeeinheit (62, 93) zur sichtbaren Wiedergabe von Informationen für den Benutzer, einen elektro-akustischen Wandler (72, 92) zur Wiedergabe von Informationen in hörbarer Form für den Benutzer, eine Vibrationseinheit (91) zum Anzeigen von vordefinierten Ereignissen für den Benutzer mittels mechanischen Vibrationen, einen Funksender (52) und/oder einen lnfrarotsender umfassen.

12. Kommunikationssystem (1) gemäss Anspruch 11, **dadurch gekennzeichnet, dass** die Anzeigeeinheit (62) eine virtuelle retinale Anzeigeeinheit umfasst, um Lichtsignale direkt auf die Retina des Benutzers zu projizieren.

13. Kommunikationssystem (1) gemäss einem der Ansprüche 11 oder 12, **dadurch gekennzeichnet, dass** der Funksender (52) für die Kommunikation über Mobilfunknetze (54), insbesondere GSM- und/oder UMTS-Netze, ausgelegt ist.

14. Kommunikationssystem (1) gemäss einem der Ansprüche 1 bis 13, **dadurch gekennzeichnet, dass** es mindestens ein Signaltransformationsmodul (6, 7) umfasst, in welchem Signaltransformationsmodul (6, 7) ein Signalaufnahmemodul (61, 71) und ein Signalgebermodul (62, 72) über eine Signalverarbeitungseinheit (63, 73) miteinander verbunden sind, wobei die Signalverarbeitungseinheit (63, 73) elektrische%ptische Signale vom letztgenannten Signalaufnahmemodul (61, 71) basierend auf Modulparametern (64, 74) des Signaltransformationsmoduls (6, 7) verarbeitet und an das letztgenannte Signalgebermodul (62, 72) weiterleitet.

15. Kommunikationssystem (1) gemäss Anspruch 14, **dadurch gekennzeichnet, dass** das Signaltransformationsmodul ein Hörgerät (7) ist, und dass die Modulparameter benutzerspezifische Hörparameter (74) sind.

16. Kommunikationssystem (1) gemäss Anspruch 14, **dadurch gekennzeichnet, dass** das Signaltransformationsmodul ein Sehgerät (6) ist, und dass die Modulparameter benutzerspezifische Sehparameter (64) sind.

17. Steuereinheit (2) für ein Kommunikationssystem (1), welches Kommunikationssystem (1) und welche Steuereinheit (2) durch einen Benutzer freihändig tragbar sind, welches Kommunikationssystem (1) ein oder mehrere Signalaufnahmemodule (3, 4, 51, 61, 65, 71, 81, 82, 83, 84) umfasst, die jeweils Signale aus der Umgebung des Kommunikationssystems (1) aufnehmen und in digitale Daten wandeln, und welches Kommunikationssystem (1) ein oder mehrere Signalgebermodule (52, 62, 72, 91, 92, 93) umfasst, die jeweils digitale Daten in Signale wandeln, die an die Umgebung des Kommunikationssystems (1) abgebbar sind und von denen insbesondere mindestens gewisse vom Benutzer über seine Sinnesorgane wahrnehmbar sind, wobei die Steuereinheit (2) mindestens eine Gerätefunkschnittstelle (21) umfasst, über welche Gerätefunkschnittstelle (21) Daten von den genannten Modulen in der Steuereinheit (2) entgegennehmbar sind und über welche Gerätefunkschnittstelle (21) Daten von der Steuereinheit (2) selektiv an die genannten Module übertragbar sind, wobei die Steuereinheit (2) Registriermittel (22) umfasst, um genannte Module, die vom Benutzer dynamisch zum Kommunikationssystem (1) hinzugefügt, respektive vom Kommunikationssystem (1) entfernt werden, automatisch zu registrieren, respektive zu deregistrieren, **dadurch gekennzeichnet,**
**dass** die Steuereinheit (2) einen Speicher (23) umfasst, in welchem eine Konfigurationstabelle gespeichert ist, in der die Bestimmung von mindestens gewissen Signalaufnahmemodulen als Datenquellen und die Zuordnung von mindestens gewissen Signalgebermodulen als Datensenken zu bestimmten Signalaufnahmemodulen, insbesondere durch den Benutzer, konfigurierbar sind, und
**dass** die Steuereinheit (2) Mittel umfasst, um Daten, die durch die Steuereinheit (2) von einem bestimmten Signalaufnahmemodul entgegengenommen werden, gemäss Angaben in der Konfigurationstabelle an ein dem bestimmten Signalaufnahmemodul zugeordnetes Signalgebermodul weiterzuleiten.

18. Steuereinheit (2) gemäss Anspruch 17, **dadurch gekennzeichnet, dass** sie Funktionseinheiten (270-275) umfasst, um Daten vor deren Übertragung an ein Signalgebermodul zu verarbeiten, wobei die Aktivierung, die Deaktivierung und/oder die Funktionsweise von mindestens gewissen Funktionseinheiten (270-275), insbesondere durch den Benutzer, konfigurierbar sind.

19. Steuereinheit (2) gemäss einem der Ansprüche 17 oder 18, **dadurch gekennzeichnet, dass** sie eine Befehlseinheit (24) umfasst, um Daten, die durch die Steuereinheit (2) von einem Signalaufnahmemodul entgegengenommen werden als Befehle zu erkennen und entsprechend einem erkannten Befehl die Ausführung von vordefinierten Funktionsblöcken (241-242) einzuleiten, wobei die Steuereinheit (2) so eingerichtet ist, dass Signalaufnahmemodule, deren Daten durch die Befehlseinheit (24) auf darin enthaltene Befehle untersucht werden sollen, insbesondere durch den Benutzer, festlegbar sind.

20. Steuereinheit (2) gemäss einem der Ansprüche 17 bis 19, **dadurch gekennzeichnet, dass** es eine entfernbare Speichereinheit (23) umfasst, und dass Modulparameter, die die Operation von individuellen genannten Modulen beeinflussen, und/oder Konfigurationsparameter, die die Interaktion zwischen genannten Modulen bestimmen und/oder Signalaufnahmemodule identifizieren, deren Daten durch eine Befehlseinheit (24) auf darin enthaltene Befehle untersucht werden sollen, in der entfernbaren Speichereinheit (23) gespeichert sind.

21. Steuereinheit (2) gemäss Anspruch 20, **dadurch gekennzeichnet, dass** die entfernbare Speichereinheit (23) Mittel zur eindeutigen Benutzeridentifizierung umfasst.

22. Steuereinheit (2) gemäss Anspruch 18, **dadurch gekennzeichnet, dass** die Funktionseinheiten (270-275) eine Sprachsyntheseeinheit (270) zur Generierung von synthetischer Sprache aus Textdaten, eine Spracherkennungseinheit (271) zur Erkennung von gesprochenem Text, eine Bildverarbeitungseinheit (272) zur Erkennung von Bildobjekten, benutzerspezifische Datenfilter (273), Signalfrequenzfilter (274) und/oder Signalfrequenztransformationseinheiten (275) umfassen.

23. Steuereinheit (2) gemäss Anspruch 19, **dadurch gekennzeichnet, dass** mindestens einer der Funktionsblöcke (241-242) so ausgestaltet ist, dass ein erkannter Befehl über die Gerätefunkschnittstelle (21) und/oder über eine Infrarotschnittstelle (25) an externe Einheiten (28, 29) ausserhalb des Kommunikationssystem (1) weiterleitbar ist.

## Claims

1. A communication system (1), which may be carried by the user in a freehand manner, comprising one or more signal receiver modules (3, 4, 51, 61, 65, 71, 81, 82, 83, 84) which in each case receive signals from the environment of the communication system (1) and convert them into digital data, and one or more signal transmitter modules (52, 62, 72, 91, 92, 93) which in each case convert digital data into signals which may be emitted to the environment of the communication system (1) and of which in particular at least certain ones may be perceived by the user via his sense organs, wherein the mentioned modules in each case have an apparatus radio interface (21), wherein the communication system (1) comprises a control unit (2) with an apparatus radio interface (21), via which apparatus radio interface (21) data may be accepted by the mentioned modules in the control unit (2) and via which apparatus radio interface (21) data may be transmitted selectively from the control unit (2) to the mentioned modules, wherein the control unit (2) comprises registration means (22), in order to automatically register or deregister the mentioned modules which are dynamically added to the communication system or removed from the communication system (1), by the user, **characterised in that**
the control unit (2) comprises a memory (23), in which a configuration table is stored, in which the definition of at least certain signal receiver modules as data sources and the assignment of at least certain signal transmitter modules, as data sinks, to certain signal receiver modules, may be configured, in particular by the user, and
that the control unit (2) comprises means, in order to transfer data which is accepted by the control unit (2) from a certain signal receiver module, to a signal transmitter module assigned to the certain signal receiver module, in accordance with the details in the configuration table.

2. A communication system (1) according to claim 1, **characterised in that** the control unit comprises function units (270-275), in order to process data before its transmission to a signal transmitter module, wherein the activation, the deactivation and/or the manner of functioning of at least certain function units (270-275), may be configured, in particular by the user.

3. A communication system (1) according to one of the claims 1 or 2, **characterised in that** the control unit (2) comprises a command unit (24), in order to recognise data which was accepted by the control unit (2) from the signal receiver module , as commands, and to initiate the implementation of predefined function blocks (241-242) according to a recognised command, wherein the control unit (2) is set up such that the signal receiver modules, whose data is to be examined by the command unit (24) with regard to commands contained therein, may be fixed, in particular by the user.

4. A communication system (1) according to one of the claims 1 to 3, **characterised in that** it comprises a removable memory unit (23), and that module parameters which influence the operation of individual mentioned modules, and/or configuration parameters which determine the interaction between mentioned modules and/or identify signal receiver modules whose data is to be examined by a command unit (24) with regard to commands contained therein, are stored in the removable memory unit (23).

5. A communication system (1) according to one of the claims 1 to 4, **characterised in that** at least certain of the mentioned modules comprise data memories (31, 41, 53, 64, 74) for storing module parameters, said module parameters influencing the operation of the module concerned, wherein these data memories (31, 41, 53, 64, 74) are accessible for the control unit (2) via the apparatus radio interface (21).

6. A communication system (1) according to claim 2, **characterised in that** the function units (270-275) comprise a speech synthesis unit (270) for generating synthetic speech from text data, a speech recognition unit (71) for recognising spoken text, a picture processing unit (272) for recognising picture objects, user-specific data filters (273), signal frequency filters (274) and/or signal frequency transformation units (275).

7. A communication system according to claim 3, **characterised in that** at least one of the function blocks (241-242) is designed such that a recognised command may be transferred via the apparatus radio interface (21) and/or via an infrared interface (25) to external units (28, 29) outside the communication system (1).

8. A communication system (1) according to one of the claims 1 to 7, **characterised in that** the signal receiver modules comprise a video sensor (61, 84) for receiving light signals, a radio receiver (3, 4, 5) for receiving radio signals, an infrared receiver (25) for receiving infrared signals, a microphone (71, 83) for receiving acoustic signals, a pressure sensor (82) for receiving mechanical pressure, an eye position evaluation unit (65) for evaluating the current viewed direction of at least one eye of the user, and/or one or more body part position evaluation units (81), for determining the current position of body parts of the user.

9. A communication system (1) according to claim 8, **characterised in that** the radio receiver (51) is designed for receiving radio signals from mobile radio networks (54) in particular GSM networks and/or UTMS networks, and/or broadcast systems (34, 44), in particular DAB (34) and/or DVB systems (44).

10. A communication system (1) according to one of the claims 8 or 9, **characterised in that** the video sensor (61) comprises at least one microelectromechanical scanner for detecting light signals.

11. A communication system (1) according to one of the claims 1 to 10, **characterised in that** the signal transmitter modules comprise a display unit (62, 93) for the visible reproduction of information for the user, an electro-acoustic transducer (72, 92) for the reproduction of information in audible form for the user, a vibration unit (91) for displaying predefined events for the user by way of mechanical vibration, a radio emitter (52) and/or an infrared emitter.

12. A communication system (1) according to claim 11, **characterised in that** the display unit (62) comprises a virtual retinal display unit, in order to project light signals directly onto the retina of the user.

13. A communication system (1) according to one of the claims 11 or 12, **characterised in that** the radio emitter (52) is designed for communication via mobile radio networks (54), in particular GSM networks and/or UTMS networks.

14. A communication system (1) according to one of the claims 1 to 13, **characterised in that** it comprises at least one signal transformation module (6, 7) in which signal transformation module (6, 7) a signal receiver module (61, 71) and a signal transmitter module (62, 72) are connected to one another via a signal processing unit (63, 73), wherein the signal processing unit (63, 73) processes electrical/optical signals from the latter mentioned signal receiver module (61, 71) on the basis of module parameters (64, 74) of the signal transformation module (6, 7) and transfers them to the last mentioned signal transmitter module (62, 72).

15. A communication system (1) according to claim 14, **characterised in that** the signal transformation module is a hearing apparatus (7) and that the module parameters are user-specific hearing parameters (74).

16. A communication system (1) according to claim 14, **characterised in that** the signal transformation module is a viewing apparatus (6) and that the module parameters are user-specific viewing parameters (64).

17. A control unit (2) for a communication system (1), said communication system (1) and said control unit (2) being able to be carried by the user in a freehand manner, said communication system (1) comprising one or more signal receiver modules (3, 4, 51, 61, 65, 71, 81, 82, 83, 84), which in each case receive signals from the environment of the communication system (1) and convert them into digital data, and said communication system (1) comprising one or more signal transmitter modules (52, 62, 72, 91, 92, 93) which in each case convert digital data into signals which may be emitted to the environment of the communication system (1), and of which in particular at least certain ones may be perceived by the user via his sense organs, wherein the control unit (2) comprises at least one apparatus radio interface (21), via which apparatus radio interface (21) data may be accepted by the mentioned modules in the control unit (2) and via which apparatus radio interface (21) data may be transmitted selectively from the control unit (2) to the mentioned modules, wherein the control unit (2) comprises registration means (22) in order to automatically register or deregister the mentioned modules which are dynamically added to the communication system (1) or removed from the communication system (1) by the user, **characterised in**
**that** the control unit (2) comprises a memory (23), in which a configuration table is stored, in which the definition of at least certain signal receiver modules as data sources and the assignment of at least certain signal transmitter modules as data sinks to certain signal receiver modules, may be configured, in particular by the user, and
**that** the control unit (2) comprises means, in order to transfer data which is accepted by the control unit (2) from a certain signal receiver module, to a signal transmitter module assigned to the certain signal receiver module, in accordance with the details in the configuration table.

18. A control unit according to claim 17, **characterised in that** it comprises function units (270-275), in order to process data before its transmission to a signal transmitter module, wherein the activation, the deactivation and/or the manner of functioning of at least certain function units (270-275), may be configured, in particular by the user.

19. A control unit (2) according to one of the claims 17 or 18, **characterised in that** it comprises a command unit (24), in order to recognise data which is accepted by the control unit (2) from the signal receiver module, as commands, and to initiate the implementation of predefined function blocks (241-242) according to a recognised command, wherein the control unit (2) is set up such that the signal receiver modules whose data is to be examined by the command unit (24) with regard to commands contained therein, may be configured, in particular by the user.

20. A control unit according to one of the claims 17 to 19, **characterised in that** it comprises a removable memory unit (23), and that module parameters which influence the operation of individual mentioned modules, and/or configuration parameters which determine the interaction between mentioned modules and/or identify signal receiver modules whose data is to be examined by a command unit (24) with regard to commands contained therein, are stored in the removable memory unit (23).

21. A control unit (2) according to claim 20, **characterised in that** the removable memory unit (23) comprises means for the unambiguous user identification.

22. A control unit according to claim 18, **characterised in that** the function units (270-275) comprise a speech synthesis unit (270) for generating synthetic speech from text data, a speech recognition unit (71) for recognising spoken text, a picture processing unit (272) for recognising picture object, user-specific data filters (273), signal frequency filters (274) and/or signal frequency transformation units (275).

23. A control unit according to claim 19, **characterised in that** at least one of the function blocks (241-242) is designed such that a recognised command may be transferred via the apparatus radio interface (21) and/or via an infrared interface (25) to external units (28, 29) outside the communication system (1).

## Revendications

1. Système de communication (1) qui peut être porté à mains libres par un utilisateur et comprend un ou plusieurs modules de réception de signaux (3, 4, 51, 61, 65, 71, 81, 82, 83, 84) qui reçoivent chacun des signaux provenant de l'environnement du système de communication (1) et les convertissent en données numériques, et un ou plusieurs modules d'émission de signaux (52, 62, 72, 91, 92, 93) qui convertissent chacun des données numériques en signaux qui peuvent émis dans l'environnement du système de communication (1) et dont en particulier au moins certains sont perceptibles par l'utilisateur via ses organes sensoriels, lesdits modules disposant chacun d'une interface radio d'appareil (21), le système de communication (1) comprenant une unité de commande (2) avec une interface radio d'appareil (21) via laquelle interface radio d'appareil (21) des données peuvent être reçues desdits modules dans l'unité de commande (2) et via laquelle interface radio d'appareil (21) des données peuvent être transmises sélectivement de l'unité de commande (2) auxdits modules, l'unité de commande (2) comprenant des moyens d'enregistrement (22) pour enregistrer, respectivement désenregistrer automatiquement lesdits modules qui sont dynamiquement ajoutés au système de communication (1), respectivement retirés du système de communication (1) par l'utilisateur, **caractérisé en ce que**
l'unité de commande (2) comprend une mémoire (23) dans laquelle est mémorisée une table de configuration dans laquelle la détermination d'au moins certains modules de réception de signaux en tant que sources de données et l'association d'au moins certains modules d'émission de signaux en tant que collecteurs de données à des modules de réception de signaux définis sont configurables, en particulier par l'utilisateur, et
que l'unité de commande (2) comprend des moyens pour retransmettre, selon des indications contenues dans la table de configuration, des données qui sont reçues par l'unité de commande (2) d'un module de réception de signaux défini à un module d'émission de signaux associé au module de réception de signaux défini.

2. Système de communication (1) selon la revendication 1, **caractérisé en ce que** l'unité de commande (2) comprend des unités de fonction (270-275) pour traiter des données avant leur transmission à un module d'émission de signaux, l'activation, la désactivation et/ou le fonctionnement d'au moins certaines unités de fonction (270-275) étant configurables, en particulier par l'utilisateur.

3. Système de communication (1) selon l'une des revendications 1 ou 2, **caractérisé en ce que** l'unité de commande (2) comprend une unité d'instructions (24) pour reconnaître les données qui sont reçues par l'unité de commande (2) d'un module de réception de signaux comme des instructions et initier conformément à une instruction reconnue l'exécution de blocs de fonction prédéfinis (241-242), l'unité de commande (2) étant conçue de façon que les modules de réception de signaux dont les données doivent être analysées par l'unité d'instructions (24) quant à des instructions qu'elles contiennent soient définissables, en particulier par l'utilisateur.

4. Système de communication (1) selon l'une des revendications 1 à 3, **caractérisé en ce qu'**il comprend une unité de mémorisation amovible (23) et que des paramètres de module qui influencent le fonctionnement dedits modules individuels et/ou des paramètres de configuration qui déterminent l'interaction entre dedits modules et/ou identifient des modules de réception de signaux dont les données doivent être analysées par une unité d'instructions (24) quant à des instructions qu'elles contiennent sont mémorisés dans l'unité de mémorisation amovible (23).

5. Système de communication (1) selon l'une des revendications 1 à 4, **caractérisé en ce qu'**au moins certains desdits modules comprennent des mémoires de données (31, 41, 53, 64, 74) pour mémoriser des paramètres de module, lesquels paramètres de module influencent le fonctionnement du module concerné, ces mémoires de données (31, 41, 53, 64, 74) étant accessibles à l'unité de commande (2) via l'interface radio d'appareil (21).

6. Système de communication (1) selon la revendication 2, **caractérisé en ce que** les unités de fonction (270-275) comprennent une unité de synthèse vocale (270) pour la génération de parole synthétique à partir de données textuelles, une unité de reconnaissance vocale (271) pour la reconnaissance d'un texte parlé, une unité de traitement d'image (272) pour la reconnaissance d'objets graphiques, des filtres de données (273), filtres de fréquence de signal (274) et/ou unités de transformation de fréquence de signal (275) spécifiques à l'utilisateur.

7. Système de communication (1) selon la revendication 3, **caractérisé en ce qu'**au moins un des blocs de fonction (241-242) est conçu de façon qu'une instruction reconnue puisse être retransmise extérieurement au système de communication (1) à des unités externes (28, 29) via l'interface radio d'appareil (21) et/ou via une interface infrarouge (25).

8. Système de communication (1) selon l'une des revendications 1 à 7, **caractérisé en ce que** les modules de réception de signaux comprennent un capteur vidéo (61, 84) pour la réception de signaux lumineux, un récepteur radio (3, 4, 5) pour la réception de signaux radio, un récepteur infrarouge (25) pour la réception de signaux infrarouges, un microphone (71, 83) pour la réception de signaux acoustiques, un capteur de pression (82) pour la réception d'une pression mécanique, une unité de détermination de position des yeux (65) pour la détermination de la direction d'observation actuelle d'au moins un oeil de l'utilisateur et/ou une ou plusieurs unité de détermination de position de parties du corps (81) pour la détermination de la position actuelle de parties du corps de l'utilisateur.

9. Système de communication (1) selon la revendication 8, **caractérisé en ce que** le récepteur radio (51) est conçu pour la réception de signaux radio de réseaux de téléphonie mobile (54), en particulier de réseaux GSM et/ou UMTS, et/ou de systèmes de diffusion (34, 44), en particulier de systèmes DAB (34) et/ou DVB (44).

10. Système de communication (1) selon l'une des revendications 8 ou 9, **caractérisé en ce que** le capteur vidéo (61) comprend au moins un scanner microélectromécanique pour la saisie des signaux lumineux.

11. Système de communication (1) selon l'une des revendications 1 à 10, **caractérisé en ce que** les modules d'émission de signaux comprennent une unité d'affichage (62, 93) pour la reproduction visible d'informations pour l'utilisateur, un convertisseur électroacoustique (72, 92) pour la reproduction d'informations sous forme audible pour l'utilisateur, une unité de vibration (91) pour l'indication d'événements prédéfinis pour l'utilisateur au moyen de vibrations mécaniques, un émetteur radio (52) et/ou un émetteur infrarouge.

12. Système de communication (1) selon la revendication 11, **caractérisé en ce que** l'unité d'affichage (62) comprend une unité d'affichage rétinien virtuel pour projeter des signaux lumineux directement sur la rétine de l'utilisateur.

13. Système de communication (1) selon l'une des revendications 11 ou 12, **caractérisé en ce que** l'émetteur radio (52) est conçu pour la communication via des réseaux de téléphonie mobile (54), en particulier des réseaux GSM et/ou UMTS.

14. Système de communication (1) selon l'une des revendications 1 à 13, **caractérisé en ce qu'**il comprend au moins un module de transformation de signaux (6, 7), dans lequel module de transformation de signaux (6, 7) un module de réception de signaux (61, 71) et un module d'émission de signaux (62, 72) sont reliés ensemble via une unité de traitement de signaux (63, 73), l'unité de traitement de signaux (63, 73) traitant des signaux électriques/optiques du réception de signaux (61, 71) cité en dernier lieu sur la base de paramètres de module (64, 74) du module de transformation de signaux (6, 7) et les retransmettant au module d'émission de signaux (62, 72) cité en dernier lieu.

15. Système de communication (1) selon la revendication 14, **caractérisé en ce que** le module de transformation de signaux est un appareil auditif (7) et que les paramètres de module sont des paramètres d'audition (74) spécifiques à l'utilisateur.

16. Système de communication (1) selon la revendication 14, **caractérisé en ce que** le module de transformation de signaux est un appareil optique (6) et que les paramètres de module sont des paramètres de vue (64) spécifiques à l'utilisateur.

17. Unité de commande (2) pour un système de communication (1), lequel système de communication (1) et laquelle unité de commande (2) peut être portés à mains libres par un utilisateur, lequel système de communication (1) comprend un ou plusieurs modules de réception de signaux (3, 4, 51, 61, 65, 71, 81, 82, 83, 84) qui reçoivent chacun des signaux provenant de l'environnement du système de communication (1) et les convertissent en données numériques, et lequel système de communication (1) comprend un ou plusieurs modules d'émission de signaux (52, 62, 72, 91, 92, 93) qui convertissent chacun des données numériques en signaux qui peuvent émis dans l'environnement du système de communication (1) et dont en particulier au moins certains sont perceptibles par l'utilisateur via ses organes sensoriels, l'unité de commande (2) comprenant au moins une interface radio d'appareil (21) via laquelle interface radio d'appareil (21) des données peuvent être reçues desdits modules dans l'unité de commande (2) et via laquelle interface radio d'appareil (21) des données peuvent être transmises sélectivement de l'unité de commande (2) auxdits modules, l'unité de commande (2) comprenant des moyens d'enregistrement (22) pour enregistrer, respectivement désenregistrer automatiquement lesdits modules qui sont dynamiquement ajoutés au système de communication (1), respectivement retirés du système de communication (1) par l'utilisateur, **caractérisé en ce que**
l'unité de commande (2) comprend une mémoire (23) dans laquelle est mémorisée une table de configuration dans laquelle la détermination d'au moins certains modules de réception de signaux en tant que sources de données et l'association d'au moins certains modules d'émission de signaux en tant que collecteurs de données à des modules de réception de signaux définis sont configurables, en particulier par l'utilisateur, et
que l'unité de commande (2) comprend des moyens pour retransmettre, selon des indications contenues dans la table de configuration, des données qui sont reçues par l'unité de commande (2) d'un module de réception de signaux défini à un module d'émission de signaux associé au module de réception de signaux défini.

18. Unité de commande (2) selon la revendication 17, **caractérisée en ce qu'**elle comprend des unités de fonction (270-275) pour traiter des données avant leur transmission à un module d'émission de signaux, l'activation, la désactivation et/ou le fonctionnement d'au moins certaines unités de fonction (270-275) étant configurables, en particulier par l'utilisateur.

19. Unité de commande (2) selon l'une des revendications 17 ou 18, **caractérisée en ce qu'**elle comprend une unité d'instructions (24) pour reconnaître les données qui sont reçues par l'unité de commande (2) d'un module de réception de signaux comme des instructions et initier conformément à une instruction reconnue l'exécution de blocs de fonction prédéfinis (241-242), l'unité de commande (2) étant conçue de façon que les modules de réception de signaux dont les données doivent être analysées par l'unité d'instructions (24) quant à des instructions qu'elles contiennent soient définissables, en particulier par l'utilisateur.

20. Unité de commande (2) selon l'une des revendications 17 à 19, **caractérisée en ce qu'**elle comprend une unité de mémorisation amovible (23) et que des paramètres de module qui influencent le fonctionnement dedits modules individuels et/ou des paramètres de configuration qui déterminent l'interaction entre dedits modules et/ou identifient des modules de réception de signaux dont les données doivent être analysées par une unité d'instructions (24) quant à des instructions qu'elles contiennent sont mémorisés dans l'unité de mémorisation amovible (23).

21. Unité de commande (2) selon la revendication 20, **caractérisée en ce que** l'unité de mémorisation amovible (23) comprend des moyens pour l'identification formelle de l'utilisateur.

22. Unité de commande (2) selon la revendication 18, **caractérisée en ce que** les unités de fonction (270-275) comprennent une unité de synthèse vocale (270) pour la génération de parole synthétique à partir de données textuelles, une unité de reconnaissance vocale (271) pour la reconnaissance d'un texte parlé, une unité de traitement d'image (272) pour la reconnaissance d'objets graphiques, des filtres de données (273), filtres de fréquence de signal (274) et/ou unités de transformation de fréquence de signal (275) spécifiques à l'utilisateur.

23. Unité de commande (2) selon la revendication 19, **caractérisée en ce qu'**au moins un des blocs de fonction (241-242) est conçu de façon qu'une instruction reconnue puisse être retransmise extérieurement au système de communication (1) à des unités externes (28, 29) via l'interface radio d'appareil (21) et/ou via une interface infrarouge (25).
